# EUROPÄISCHE PATENTSCHRIFT

(11) **EP 2 591 228 B1**
(45) Veröffentlichungstag und Bekanntmachung des Hinweises auf die Patenterteilung: **28.03.2018**
(21) Anmeldenummer: 11731266.0
(22) Anmeldetag: 07.07.2011
(51) Int. Cl.: F03D 7/02, H02P 9/04, F03D 13/20, H02K 7/18, F03D 80/70, F03D 9/25

(54) **WINDENERGIEANLAGE UND VERFAHREN ZUR VERSTELLUNG DER ROTORDREHACHSE**
WIND POWER INSTALLATION AND METHOD FOR ADJUSTING THE ROTOR ROTATION AXIS
ÉOLIENNE ET PROCÉDÉ DE RÉGLAGE DE L'AXE DE ROTATION DU ROTOR

(30) Priorität: 07.07.2010 DE 102010031081
(43) Veröffentlichungstag der Anmeldung: 15.05.2013
(73) Patentinhaber: SkyWind GmbH, 25813 Husum (DE)
(72) Erfinder: RICHERT, Frank, 25920 Stedesand (DE); PFLAUM, Sebastian, 82216 Maisach (DE)
(74) Vertreter: Winter, Brandl, Fürniss, Hübner, Röss, Kaiser, Polte - Partnerschaft mbB
(86) Internationale Anmeldenummer: PCT/EP2011/003383
(87) Internationale Veröffentlichungsnummer: WO 2012/003985

(56) Entgegenhaltungen:
- EP-B1- 1 101 934
- WO-A1-95/00757
- WO-A1-2010/028340
- WO-A2-2008/089763
- US-A- 4 297 075
- US-A- 4 311 434
- US-A1- 2002 070 558
- US-A1- 2010 117 368

## Beschreibung

Windenergieanlagen der verschiedensten Konzeptionen sind bereits seit längerer Zeit bekannt. Beispielhaft sei auf den Stand der Technik verwiesen, wie er unter anderem auch durch die Dokumente US 6,979,175, EP 2 014 912, DE 199 16 454 A1, DE 27 53 956 B1, WO 82/04466, WO 2008/148874 A1, DE 102 05 988 B4, US 2001/0038207 A1, EP 1 101 936 B1, EP 1 101 934 B1, WO 96/10130 US431434 US2002/070558, WO95/00757, US4297075, WO2010/028340, US2010/117368, WO2008/089763 bekannt ist. Auch sei verwiesen auf Erich Hau, Windkraftanlagen, 1995 (ISBN 3-540-57430-1).
Bei bisherigen Windenergieanlagen ist regelmäßig einer Maschinenträger, welcher den Rotor mit Rotorblättern sowie Generator und/oder gegebenenfalls Getriebe und dgl. aufnimmt, fest auf der Spitze eines Turms der Windenergieanlage verankert und dabei vorzugsweise auf einem Azimut-Lager gelagert, um die Verstellung des Rotors und damit des Maschinenträgers in jede Richtung zu ermöglichen, damit der Wind optimal den Rotor der Windenergieanlage anströmen kann. Zum Verstellen des Maschinenträgers sind dabei Antriebe zur Azimutverstellung vorgesehen, die den Rotor und damit den Maschinenträger in eine gewünschte Stellung zum Wind bringen, indem eine kontinuierliche Anpassung an die Windrichtung erfolgt.

Steigt nun der Wind sehr stark an, so kann die gesamte Belastung auf die Rotor-Generator-Maschinenträger-Einheit so groß werden, dass die Anlage in einen Überlastbereich kommt, was letztlich zu Schäden der Anlage, wenigstens aber auch zur Überlastung einzelner Teile der Windenergieanlage führen kann.

Bei allen derzeit im Betrieb befindlichen Windenergieanlagen, die eine bestimmte Nennleistung überschreiten, z.B. mehr als 500 kW, und damit nicht als Kleinwind- oder Mittelwind-Windenergieanlagen gelten, ist der Rotor der Windenergieanlage regelmäßig aus Windrichtung gesehen vor dem Turm der Windenergieanlage angeordnet und der Rotor besteht dabei wenigstens aus einem Rotorblatt, bevorzugt aus zwei oder drei Rotorblättern. Der Rotor dreht sich dabei um eine im Wesentlichen horizontale Achse, die auch um wenige Winkelgrade gegenüber dem Turm geneigt sein kann.

Während des Betriebs der Windenergieanlage kommt es dabei vor, dass mit immer weiter ansteigender Windgeschwindigkeit nicht nur der Druck auf die Rotorblätter des Rotors zunimmt, sondern dass der Abstand zwischen Rotorblatt und Turm beim Vorbeistreichen eines Rotorblatts am Turm sich mit immer weiter höheren Windgeschwindigkeiten verringert.

Um eine Kollision zwischen einem Rotorblatt und dem Turm beim Vorbeistreichen des Rotorblatts am Turm sicher zu vermeiden, wird deshalb bei fast allen größeren Windenergieanlagen, also Windenergieanlagen mit einer Nennleistung von über 300 oder 500 kW, die Rotorachse um einen bestimmten, unveränderbaren Rotorachswinkel, z.B. im Bereich von 4° bis 8°, bevorzugt 5° bis 7° zum Turm der Windenergieanlage eingestellt. Durch die Rotorachsneigung verringert sich die dem Wind zugeneigte Rotorfläche und es verringert sich damit die vom Rotor aufnehmbare Windenergie, insbesondere im Bereich von Windgeschwindigkeiten, die zwischen 0 und 10 m/s liegen.

Die Lage der Schwerpunkte der Rotorblätter führt bei einer Rotorachsneigung zu einer wechselnden Belastung des Rotorblattanschlusses und des Triebstrangs. Der Triebstrang wird gebildet aus dem Rotor und dem mit dem Rotor gekoppelten Generator, welche bevorzugt über ein Getriebe miteinander verbunden sind.

Da mit ansteigender Höhe über dem Erdboden auch die Windgeschwindigkeit ansteigt, erfahren die Rotorblätter in einer typischen "12-Uhr-Position" eine höhere Kraft aufgrund der dort vorherrschenden höheren Windgeschwindigkeiten als in einer typischen 6-Uhr-Position. Die unterschiedlichen Windgeschwindigkeiten, die durch den Rotor bzw. die Blätter des Rotors überstrichen werden, führen letztlich daher auch zu wechselnden Lasten im Triebstrang.

Die Druckschrift WO 2009/056701 A2 zeigt eine Windenergieanlage mit zwei Rotorblättern, welche dadurch demontiert werden kann, dass der Rotor zusammen mit den Rotorblättern von der Gondel an der Turmspitze, an welcher die Windenergieanlage vorgesehen ist, über im Turm geführte Seilzüge herabgelassen wird, wobei die Rotorblätter jeweils über ein Seil oder dergleichen beim Herablassen positioniert und gesichert werden und der Rotor beabstandet von dem Turm entlang zweier Führungsseile von dem Turm weggeführt wird, und wobei die bei der Demontage radial zum Turm bzw. auf die Gondel wirkenden Zugkräfte durch drei Seile aufgenommen und in den Erdboden geleitet werden, welche den Turm seitlich verspannen und sichern. Die Rotorblätter können auf dem Erdboden jeweils auf einer speziell ausgebildeten profilierten Rotorblattstütze abgelegt werden.

Aus der Druckschrift US 2009/0087311 A1 ist ein Verfahren bekannt, eine Gondel einer Windenergieanlage mittels eines externen Mechanismus von unten nach oben zu der Betriebsposition anzuheben, wobei der Mechanismus zum Anheben der Gondel am Fuß des Turms der Windenergieanlage angeordnet und teleskopartig aufgebaut ist. Beim Anheben wird die Gondel entlang des Turms geführt.

Bei Wartung, Reparatur oder Abbau einer Windenergieanlage besteht Bedarf, die Windenergieanlage auf den Boden zu befördern, z.B. weil die Wartung durch den Einsatz eines Hubschraubers allein nicht durchgeführt werden kann, oder weil ein Reparieren oder Austauschen bestimmter Komponenten nicht ohne eine vollständige Demontage praktikabel ist. Eine Schwierigkeit besteht darin, den üblicherweise erforderlichen Kran zur Demontage von Rotor oder komplettem Triebstrang bereitzustellen. Hier kann es aufgrund begrenzter Verfügbarkeit zu langem Stillstand der Windenergieanlage und damit Ertragsverlust kommen.

Rotorsysteme mit drei oder mehr Rotorblättern können z.B. mit einem Kran von einem Turm oder sonstigen Tragwerk abgehoben und abgesenkt werden, was aber bei den derzeit größer werdenden Rotoren und damit einhergehenden höheren Gewichten der Gondeln sowie höher werdenden Tragwerken (Türme) dazu führt, dass immer schwerere Kräne und größere Kräne mit höherer Tragfähigkeit und erweiterten Hubhöhen eingesetzt werden müssen. Diese Vorgehensweise erfordert einen hohen Kosten- und Zeitaufwand, wobei die Handhabung der Gondeln an diesen Kränen, aber auch der Kräne selbst, schwierig und mit Risiken behaftet sind.
Die Druckschrift FR 2 916 785 A1 zeigt eine Demontagevorrichtung für eine Windenergieanlage, welche dadurch demontiert werden kann, dass im Bereich des Turmfußes eines Turms, auf welchem die Windenergieanlage montiert ist, ein Scharnier vorgesehen ist, um welches der Großteil des Turms zusammen mit der Gondel bzw. Windenergieanlage und den Rotorblättern geschwenkt und bis auf den Boden abgesenkt werden kann, wobei die dabei auftretenden hohen Gewichtskräfte und die auf den Turm wirkenden Biegemomente dadurch aufgefangen werden können, dass zwei Hebel vorgesehen sind, die mit einer Länge im Bereich der halben Turmhöhe ausgeführt sind und über welche Seile geführt sind, die an der Turmspitze angreifen und vom Fuße des Turms aus über Seilzüge gehandhabt werden können.
Allgemein ist es bei einer Wartung oder Reparatur oder auch bei einem Abbau der Windenergieanlage erforderlich, die im Bereich der Turmspitze angeordneten Teile der Windenergieanlage auf den Boden in der Umgebung des Turms abzusenken. Neben den Kosten stellt auch die Verfügbarkeit der für diesen Zweck geeigneten Kräne ein Problem dar. Insbesondere bei Schäden an Windenergieanlagen steigt die Dauer des Nutzungsausfalls zusammen mit der Zeit zur Beschaffung eines geeigneten Krans an. Während dieser Zeiten kann somit die Windenergieanlage nicht genutzt werden, so dass erhebliche Ausfallzeiten entstehen.
Der Erfindung liegt daher die Aufgabe zugrunde, eine Windenergieanlage der eingangs genannten Art derart auszugestalten, dass ein Absenken oder Anhaben der Turbine der Windenergieanlage zu dem Bereich der Turmspitze auf einfache Weise und mit einem geringen Zeitaufwand möglich ist. Der Erfindung liegt ebenfalls die Aufgabe zugrunde, die Windenergieanlage derart auszugestalten, dass die Turbine an ihrem Turm in beliebiger Weise verfahren und an unterschiedlichen Positionen angeordnet werden können.
Diese Aufgaben werden gemäß der vorliegenden Erfindung gelöst durch eine Windenergieanlage mit den im Patentanspruch 1 angegebenen Mitteln.

Mittels der erfindungsgemäßen Anordnung ist gewährleistet, dass die Windenergieanlage um einen Winkel im Bereich von 0 bis zumindest 120 Grad (gesamter Winkelbereich) gedreht oder gekippt werden kann, und zwar derart, dass diese optimal und platzsparend entlang einer Tragstruktur, wie des Turms der Windenergieanlage bewegt und verfahren werden kann, und zum anderen kann unabhängig davon sichergestellt werden, dass Rotorblattanschlüsse an einer Windenergieanlage optimal auf ein in bestimmten Situationen jeweils zu montierendes Rotorblatt ausgerichtet werden können.
Insbesondere kann durch die oben angegebenen Merkmale der Erfindung erreicht werden, dass neben einer für den Betrieb üblichen Rotorachsneigung von ca. 4° bis 10° (innerhalb eines ersten Winkelbereichs) gegenüber der Horizontalen (Bezugsebene H) auch andere eine Montage erleichternde oder ermöglichende Kipp- oder Neigungswinkel gemäß einem zweiten Winkelbereich eingestellt werden können, also z.B. auch Kipplagen im Bereich vertikaler Rotorachsneigung. Dabei können auch einzelne Rotorblätter bei gegebenenfalls geneigtem Boden auf einfache Weise montiert oder demontiert werden, indem über den Kippwinkel speziell dafür die Lage bzw. Ausrichtung des jeweiligen Rotorblattes in Bezug auf den Boden eingestellt wird. Der Rotor kann auf dem Boden vollständig und mit einfachen Mitteln vormontiert werden. Auch kann die Windenergieanlage in Bezug auf die Montage/Demontage anderer Komponenten so gekippt oder gedreht werden, dass z.B. der Einbau eines (Ersatz-)Getriebes erleichtert wird. Hierzu kann die gesamte Windenergieanlage (bzw. ohne bereits wegen eines Einbaus des Getriebes demontierten Komponenten) beispielsweise über einem auf einem Montageplatz in einer Montageposition bereitgestellten (Ersatz-)-Getriebe mit der richtigen Winkelausrichtung der Rotorachse abgesenkt werden, und das (Ersatz-)-Getriebe kann dann direkt an die Windenergieanlage gekoppelt werden. Ein Anheben und Ausrichten mittels eines Krans ist nicht erforderlich. In der vorliegenden Beschreibung werden die Begriffe Montage/Demontage als synonym zu dem Begriff Wartung und/oder Reparatur aufgefasst, da in allen diesen Fällen gleiche oder ähnliche Maßnahmen zu ergreifen sind.
Ferner kann erreicht werden, dass Windenergieanlagen mit Mehrblattrotoren eng am Tragwerk, also ohne großen Platzbedarf, herauf gezogen bzw. bis auf den Boden abgesenkt werden können. Der Platzbedarf ist dabei auch insofern gering, als bei der Errichtung einer Windenergieanlage die Rotorblätter auf dem Boden in einer Montageposition unmittelbar neben dem Tragwerk (Turm) an dem Rotor befestigt werden können, dann in dieser Ausrichtung vertikal nach oben eng an dem Tragwerk entlang verfahren werden können, und erst in einer Höhe gekippt werden müssen, in welcher beim Kippen die Blätter nicht mehr mit benachbarten Gegenständen kollidieren können. Dabei ist auch eine Drehung des Rotors gegenüber der Hochachse des Tragwerks um das Tragwerk herum nicht ausgeschlossen. Ein vertikales Verfahren und ein Verschwenken sind bei der erfindungsmäßen Lösung mit ein und derselben Vorrichtung ohne weitere Hilfsmittel möglich. Ein Verfahren von Teilen der Windenergieanlage ist unabhängig von dem Drehen (Verschwenken oder Kippen) beispielsweise der Turbine.
Vorteilhafte Weiterbildungen der Erfindung sind in den Unteransprüchen beschrieben.

Die weitere Lagereinrichtung ist erfindungsgemäß für einen zeitweiligen Eingriff mit zumindest einem an der Turbine angeordneten Verbindungsarm während des Schwenkens ausgebildet, wobei mittels der Schwenkeinrichtung nach Abschluss des Schwenkvorgangs der Eingriff zwischen der Turbine und der weiteren Lagereinrichtung lösbar ist.

Die Schwenkeinrichtung weist einen Seilzug zum beweglichen Halten der Turbine während des Schwenkvorgangs und zum Lösen des Eingriffs nach Abschluss des Schwenkvorgangs auf. Die Schwenkeinrichtung ist ebenfalls ausgebildet, mittels des Seilzugs die Turbine in der geschwenkten Position abzusenken.
Der Turbinenträger kann eine Verfahreinrichtung aufweisen zum Bewegen des Turbinenträgers entlang der Tragstruktur zwischen einer obersten Position an einem oberen Ende der Tragstruktur und einer untersten Position am Fuß der Tragstruktur. Der Turbinenträger kann eine Halterungseinrichtung umfassen zum Tragen und Befestigen des Turbinenträgers an einer beliebigen Position entlang der Tragstruktur. Das Drehlager kann in der Nähe des Schwerpunkts der Turbine angeordnet sein. Ferner kann die Schwenkeinrichtung erste Umlenkrollen an der Turbine umfassen, und es können die ersten Umlenkrollen an der Turbine in der Nähe ihres Schwerpunkts angeordnet sein.

Die vorliegende Erfindung wird nachstehend anhand von Ausführungsbeispielen im Einzelnen in Verbindung mit den zugehörigen Figuren beschrieben. Es zeigen:
Figur 1 eine teilweise Schnittansicht eine Windenergieanlage bei welcher eine Turbine der Windenergieanlage um eine Drehachse gegenüber einer horizontalen Ebene geschwenkt werden kann;
Figur 2 ein Blockschaltbild zur Veranschaulichung einer Regelungsstruktur zum Regeln einer Windenergieanlage gemäß Figur 1;
Figur 3 eine perspektivische Schnittansicht eine Windenergieanlage mit Einzelheiten einer möglichen Anordnung von Getriebe und Generator sowie eines Drehpunkts oder einer Drehachse einer Windenergieanlage gemäß Figur 1;
Figur 4 eine vereinfachte und schematische Seitenansicht eine Lagerungsstruktur zum Tragen der Turbine, die bei einer Windenergieanlage gemäß dem vorgenannten Ausführungsbeispiel vorgesehen sein kann,
Figur 5 eine perspektivische schematische Darstellung zur Veranschaulichung der Windenergieanlage bei der die Turbine relative zu einem Turbinenträger geschwenkt und zusammen mit dem Turbinenträger abgesenkt wird,
Figur 6 eine vereinfache schematische Darstellung einer Turbine und eines an einem Turm der Windenergieanlage angeordneten Turbinenträgers mit der Möglichkeit des Schwenkens der Turbine,
Figur 7 eine vereinfachte Darstellung einer Anordnung der Turbine an dem Turbinenträger mit der Möglichkeit des Schwenkens der Turbine (gemäß den zweiten Winkelbereich),
Figur 8 eine weitere vereinfachte Darstellung einer Anordnung der Turbine an dem Turbinenträger mit der Möglichkeit des Schwenkens der Turbine,
Figur 9 eine weitere vereinfachte Darstellung einer Anordnung der Turbine an dem Turbinenträger mit der Möglichkeit des Schwenkens der Turbine,
Figur 10 eine vereinfache schematische Darstellung einer Turbine und eines an einem Turm der Windenergieanlage angeordneten Turbinenträgers mit der Möglichkeit des Verfahrens des Turbinenträgers sowie des Schwenkens und Absenkens der Turbine,
Figur 11 eine perspektivische Darstellung der erfindungsgemäßen Ausgestaltung der Turbine und ihrer Anordnung an dem Turbinenträger mit der Möglichkeit des Schwenkens der Turbine in Verbindung mit Seilzügen,
Figur 12 (mit Figuren 12A bis 12D) verschiedene Darstellungen des Vorgangs des Anhebens der Turbine und Anordnen derselben an dem Turbinenträger auf der Basis der erfindungsgemäßen Ausgestaltung der Turbine und des Turbinenträger gemäß Figur 11, und
Figur 13 eine weitere vereinfachte Darstellung einer Anordnung der Turbine an dem Turbinenträger zur Veranschaulichung eines modularen Aufbaus der Windenergieanlage.

### Beschreibung bevorzugter Ausführungsbeispiele

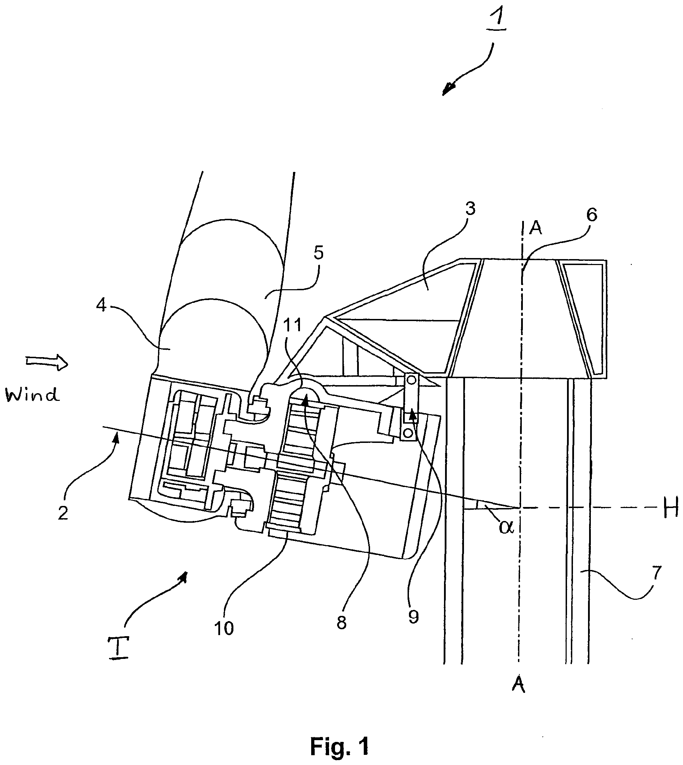

Die Anordnung einer Windenergieanlage wird nachstehend anhand der Figuren 1 bis 3 beschrieben.
Die in Figur 1 gezeigte Windenergieanlage 1 kann regelmäßig um drei Drehachsen gedreht werden. Die ist zum einen die Rotordrehachse 2, um die sich ein Rotor 4 mit daran im Allgemeinen drehbar angeordneten Rotorblättern 5 dreht. Es ist dies auch die Mittenachse des Rotors 4. Des Weiteren kann sich ein Turbinenträger 3 zur Mittenachse A-A 6 einer Tragstruktur in Form eines Turms 7 entsprechend drehen, um den Turbinenträger 3 und damit den Rotor 4 mit den Rotorblättern 5 optimal zum Wind auszurichten (Azimutverstellung). Und schließlich kann jedes Rotorblatt 5 durch eine Pitchregelung (Pitch-Verstellung) um die eigene Längsachse gedreht werden, um damit die auf den Rotorblättern entstehenden Luftkräfte auf einen gewünschten Wert einzustellen.
Hierbei hatte diese Bauart von Windenergieanlagen bisher einen fest definierten Winkel der Rotorachse zur Turmhochachse A-A oder auch zu einer Horizontalen. Die in Figur 1 gezeigte Anordnung umfasst daher ferner eine weitere Drehachse bzw. Kippachse 8, d. h. eine Drehachse, die im Wesentlichen senkrecht zur Rotordrehachse verläuft und die ein Verstellen eines Winkels *α*, welcher durch die Rotordrehachse 2 zu einer gedachten Horizontalen gebildet wird. Der Winkel *α* wird in Bezug auf die Betriebsbedingungen Rotorachswinkel (oder Neigungswinkel oder Tilt-Winkel) genannt und beträgt bei bisherigen Windenergieanlagen regelmäßig ca. 5° bis 7° und ist bei bekannten Windenergieanlagen konstruktiv festgelegt und fest eingestellt. Demgegenüber kann um die weitere Drehachse 8 ein Kippen oder Drehen im Bereich größerer Winkel erfolgen, z.B. im Bereich von 0 bis 100 Grad, insbesondere zur Demontage oder Montage von irgendwelchen Komponenten der Windenergieanlage. Die Erfindung ist auf die beispielhafte Angabe des Winkels nicht festgelegt, und es können auch abhängig von einem Bedarf größere Winkel eingestellt werden

Einerseits kann um die Drehachse 8 der gesamte Rotor 4 sowohl hinsichtlich seines Drehwinkels *α* (kleine Winkel, erster Winkelbereich) oder auch um einen erheblich größeren Winkel (zweiter Winkelbereich) in Richtung nach unten in den Figuren gedreht werden. Hierbei kann nun die Drehachse 8 für Drehwinkel im Bereich größerer Winkel mit der Drehachse für kleine Drehwinkel von beispielsweise 4° bis 8° (Figur 1) zusammenfallen. Der erste und der zweite Winkelbereich grenzen aneinander und der sich daraus ergebende gesamte Winkelbereich kann dabei zumindest 120° oder auch mehr als 120° betragen.

Eine Feineinstellung des Neigungs- oder Tilt-Winkels α im Betrieb kann dann um diese eine Achse erfolgen. Jedoch können Kippachse und Drehachse auch auseinanderfallen. Für jede der Schwenkbewegungen (kleine Winkel im Betrieb, große Winkel zur Montage bzw. Demontage) kann ein eigener dafür geeigneter Antrieb bzw. Aktuator vorgesehen sein, es kann aber auch ein Aktuator vorgesehen sein, welcher beide Schwenkbewegungen einstellen kann, unabhängig davon, ob die beiden Achsen koaxial sind (also zusammenfallen) oder nicht. Ein und dieselbe Achse sowohl für die kleinen als auch die großen Kippwinkel kann den Vorteil bieten, dass auf einfache Weise eine Feineinstellung des Kippwinkels auch für Montagezwecke erfolgen kann, z.B. bei sehr langsamer Kippbewegung, und dies kann mit einem einzigen oder auch mit zwei speziellen auf die jeweilige Kippbewegung optimierten Aktuatoren erfolgen.

Zur Vornahme der entsprechenden Verstellung kann ein Antrieb 9 vorgesehen sein, welcher sich am Turbinenträger 3 abstützt und eine Kraft annähernd senkrecht zur Rotordrehachse auf einen Triebstrang 10 ausübt. Der Triebstrang 10 der Windenergieanlage 1 umfasst den Rotor 4 sowie einen Generator zur Umwandlung der Rotationsenergie in elektrische Energie, und fallweise ein Getriebe, mittels dessen der Rotor und der Generator miteinander verbunden sind. Die Gesamtheit der Elemente aus dem Rotor 4 mit den Rotorblättern 5, dem Getriebe und dem Generator und auch mit einer Rotornabe wird nachstehend auch als Turbine T bezeichnet.

Für die Drehung/Verschwenkung der Turbine T um die Drehachse 8 ist ein Drehlager 11 vorgesehen, welches die Bewegung der Turbine T um die Drehachse 8 erlaubt. Die Drehbewegung wird dabei durch den Antrieb 9, bevorzugt durch mehrere gleichartige oder unterschiedliche Antriebe gesteuert, wobei als Antrieb ein Hydraulikzylinder zum Einsatz kommen kann und/oder alternativ auch andere Antriebsmöglichkeiten vorgesehen werden können wie z.B. elektrische Motoren oder andere rotierende oder lineare bewegliche Aktuatoren. Hiermit kann die Turbine T um die Drehachse 8 eingestellt werden, um einen gewünschten Winkel α der Rotordrehachse 2 (entspricht der Turbinendrehachse) einzustellen.

Durch eine Verdrehung des Rotors 4 um eine Drehachse, sei es zum Zweck der Einstellung eines gewünschten Winkels relativ zur im Wesentlichen horizontalen Bezugsebene H (auch als Tilt-Winkel bezeichnet) oder zur Montage bzw. Demontage, kann nunmehr die Turbine T abhängig z.B. von der aktuellen Windgeschwindigkeit um einen unterschiedlichen Winkel α eingestellt werden, und der Rotor 4 oder auch die gesamte Turbine T kann auf einfache Weise, insbesondere platzsparend, montiert oder demontiert und gewartet werden. Hierzu kann die Windgeschwindigkeit auch in verschiedenen Höhen am Turm 7 mittels geeigneter Einrichtungen gemessen bzw. erfasst werden. Dabei ist es im Betrieb z.B. vorteilhaft, dass erst ab Erreichen einer Nennwindgeschwindigkeit oder einer anderen vorbestimmten Windgeschwindigkeit, mit der die Windenergieanlage beaufschlagt wird, der Tilt-Winkel α (Neigungswinkel, Schwenkwinkel) den von bisherigen Windenergieanlagen bekannten Wert von 5° bis 7° einnimmt, dass aber im Bereich der geringeren Windgeschwindigkeiten der Tilt-Winkel geringer ist, beispielsweise nahe Null Grad ist, um somit die effektiv überstrichene Rotorblattfläche und damit den Wirkungsgrad der Windenergieanlage optimal zu halten.

Die Regelung der Rotorachsneigung, in Abhängigkeit von der Windgeschwindigkeit wird dabei mit Hilfe eines Regelkreises verifiziert. Dabei wird die Rotorachsneigung der Windenergieanlage geregelt, z.B. in Abhängigkeit von der momentanen Windgeschwindigkeit V_{Wind}, beispielsweise derart, dass der gewünschte Winkel bzw. die Rotorachsneigung α (aus dem ersten Winkelbereich) ansteigt mit ansteigender Windgeschwindigkeit. Bei geringen Windgeschwindigkeiten von z.B. 2-4 m/s ist die Ausrichtung horizontal und damit die Rotorachsneigung α=0.

Die Windgeschwindigkeit V_{Wind} wird in eine mathematische Funktion für α=f (V_{wind}) in eine Vorgabe für eine einzustellende Rotorachsneigung α umgerechnet und als Sollwert einem geeigneten Regler zugeführt, der sodann über den Antrieb 9 (Aktuator) die gewünschte Rotorachsneigung des Rotors bzw. der Turbine T einstellt.

Darüber hinaus (oder alternativ hierzu) kann im Betrieb auch eine dynamische Regelung der Rotorachsneigung vorgenommen werden. Bei jeder Rotorumdrehung wird aufgrund der unterschiedlichen Kräfte auf die Rotorblätter, hervorgerufen z. B. durch die unterschiedlichen Windgeschwindigkeiten in Abhängigkeit von der Höhe und beim Durchlaufen der Blätter im Turmschatten, eine unterschiedliche Belastung ausgeübt, so dass eine leicht periodische Pendelbewegung entsteht. Erfindungsgemäß kann nunmehr durch eine entsprechende Ansteuerung des Antriebs zur Einstellung des Neigungswinkels α des Rotors bzw. der Turbine T eine dynamische, gegebenenfalls periodische Kraft erzeugt werden, die dieser Pendelbewegung und weiteren instationären Rotorkräften entgegenwirkt. Es könne auch entsprechende Dämpfungselemente vorgesehen sein.

Hierzu werden bevorzugt Kräfte in oder auf den Rotorblättern gemessen und voneinander subtrahiert. Über eine mathematische Funktion Δα_{dyn}=f(ΔF) wird hieraus eine dynamische Änderung der eingestellten Rotorachsneigung α berechnet und von einem Vorgabewert der Rotorachsneigung αₛₒₗₗ abgezogen. Zur optimalen Berechnung von Δα_{dyn} kann ergänzend noch die aktuelle Rotorlage _{PosBlatt} mit herangezogen werden.

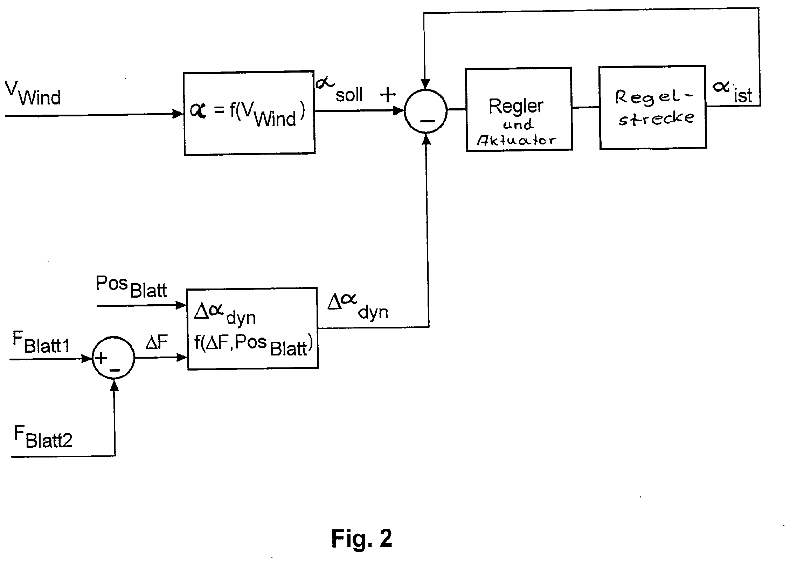

Eine Regelungsstruktur (Regelkreis) ist in Figur 2 aufgezeigt. Darin bedeuten V_{Wind} = Windgeschwindigkeit, α=Tilt-Winkel oder Neigungswinkel, F_{Blatt1}=Kraft auf das erste Blatt, F_{Blatt2}=Kraft auf das zweite Blatt, Pos_{Blatt=gem} (= gemessene Blattposition), α_{dyn}=dynamischer Tilt-Winkel und α ist der real eingestellte Tilt-Winkel oder Neigungswinkel aus dem ersten Winkelbereich. Mittels eines in Figur 2 gezeigten Blocks "Regler und Aktuator" sowie eines weitere mit "Regelstrecke" bezeichneten Blocks wird aus dem Werten αₛₒₗₗ und Δα_{dyn} die Regelstrecke in Form des Antriebs 9 (Figur 1) beeinflusst.

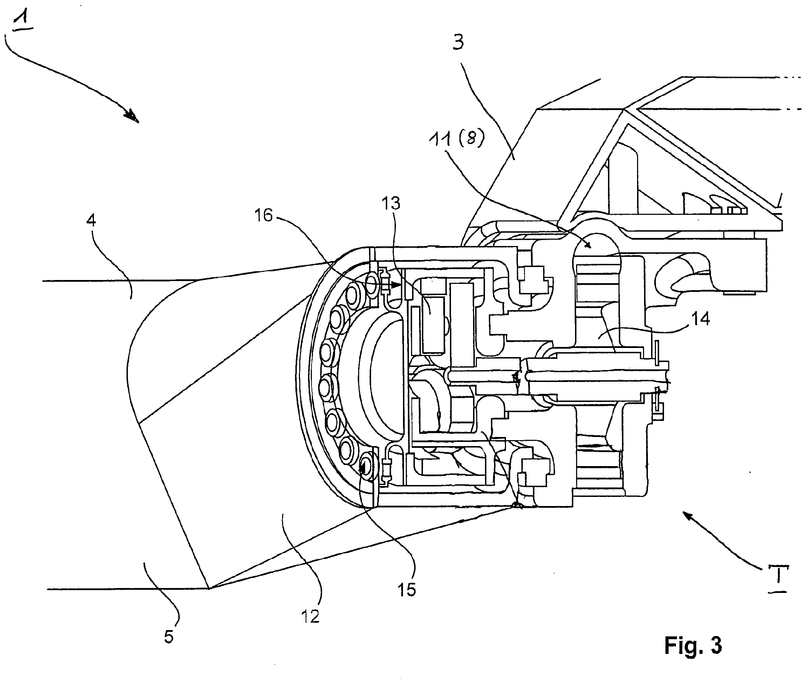

Figur 3 zeigt einen Querschnitt durch die Windenergieanlage. Sie umfasst das Rotorblatt 5, welches Teil des Rotors 4 ist. Der Rotor 4 weist eine Rotornabe 35 auf, welche das Getriebe 13 (sofern erforderlich) aufnimmt, das eingangsseitig die Kräfte des Rotors 4 aufnimmt und ausgangsseitig an den sich drehenden Teil des Generators 14 abgibt. Der Generator 14 ist bevorzugt ein Asynchrongenerator mit einem Käfigläufer oder ein Synchrongenerator, welcher die erzeugte elektrische Energie mit einer recht hohen Ausgangsspannung, z.B. 10 kV ausgibt. Das Getriebe ist bevorzugt mit einer Trockensumpfschmierung versehen. Die vorstehend beschriebene Anordnung wird wie bereits angegeben auch als die Turbine T bezeichnet.

In Figur 3 sind weitere Einzelheiten des Getriebes 13 dargestellt; hierbei ist zu erkennen, dass eine Elastomer-Kupplung 15 vorgesehen ist, welche bevorzugt so ausgelegt ist, dass die Einleitung von Axialkräften auf den Rotor 4 bzw. Verformungen der Rotornabe 12 in ein Getriebegehäuse 16 soweit wie möglich verhindert bzw. minimiert werden. Das Getriebegehäuse kann wie dargestellt auch nur über die Elastomer-Kupplung 15 gehalten werden oder stützt sich über ein (nicht gezeigtes) Lager an einem nichtrotierenden Planetenträger ab.

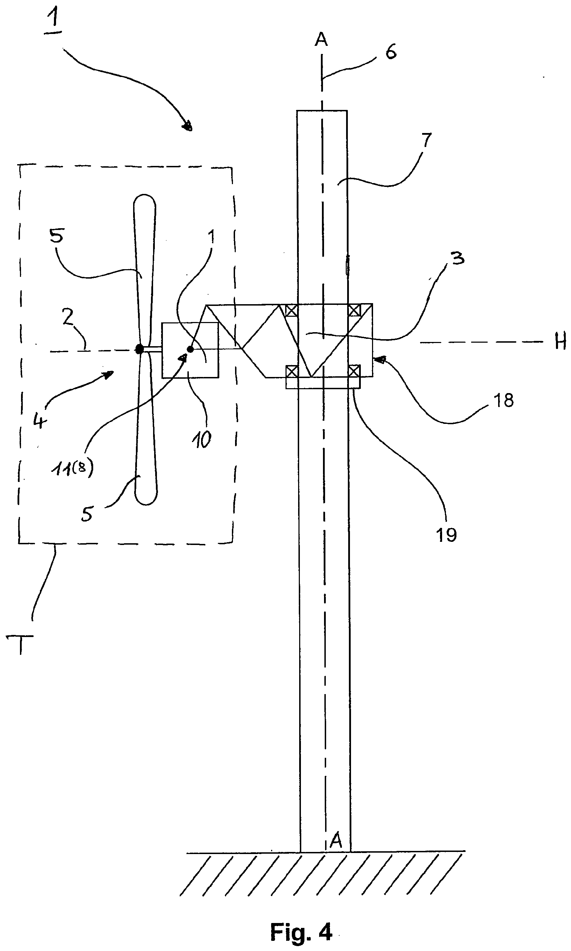

Figur 4 zeigt schematisch und vereinfacht den Aufbau der Windenergieanlage 1 mit Merkmalen, die auch unabhängig von den vorbeschriebenen Merkmalen realisiert werden können.

Ziel der Anordnung gemäß Figur 4 ist die Bereitstellung einer funktionalen Trennung zwischen einer klassischen Windenergieanlage 1 (bestehend aus Turbine, Steuerung etc.) und deren Turm 7 (Tragstruktur) und der Notwendigkeit für die Lagerung der Windenergieanlage 1 in einem bestimmten Abstand über dem Erdboden, und hierbei wird eine geeignete Struktur in Form einer Lagerungsstruktur eingesetzt. Die Lagerungsstruktur entspricht dem Turbinenträger 3 gemäß Figur 1, da mittels der Lagerungsstruktur die Turbine T der Windenergieanlage gelagert wird, wobei ein vorbestimmtes Schwenken um den Winkel α (hier gesamter Winkelbereich, der größer als 120° sein kann) möglich ist.

Die Aufgabe der Lagerungsstruktur besteht dabei darin, den dynamischen Teil einer Windenergieanlage 1, also Rotor 4, Generator, gegebenenfalls Getriebe, Steuerung und Subsysteme hierfür wie z.B. Bremsen, Aktuatoren für die Blattverstellung (Pitchantriebe) etc. und somit die gesamte Turbine T auf ein gewünschtes Niveau und damit eine vorbestimmte Höhe über dem Erdboden einzustellen. Die Lagerungsstruktur oder der Turbinenträger 3 stützt sich dabei am Turm 7 der Windenergieanlage 1 ab, kann Rotor 4, Generator, gegebenenfalls Getriebe, Steuerung etc. um die Vertikalachse, also die Turmachse A-A 6 drehen (Azimut-Verstellung).

Im Falle einer Reparatur kann mittels des Turbinenträgers 3 die gesamte Anlage am Turm 7 bis zum Erdboden herunter gefahren werden und es ist auch möglich, dass bei einem großen Sturm die Turbine T mit oder ohne Turbinenträger 3 der Windenergieanlage 1 von ihrer Topposition (einer allgemeinen oberen Betriebsposition) weiter nach unten zu einer Zwischenposition verfahren wird, um somit auch einen Betrieb der Windenergieanlage 1 bei sehr starkem Wind zu ermöglichen (bei einem Sturm ist die Windgeschwindigkeit in Bodennähe geringer als in großer Höhe über dem Erdboden). Dies wird nachstehend noch im Einzelnen anhand weiterer Figuren beschrieben.

Wie Figur 4 zeigt, kann bei dem Turbinenträger 3 eine Verfahreinrichtung 18 vorgesehen sein, mittels der die Turbine T und der Turbinenträger 3 auf eine gewünschte Höhe über dem Erdboden verfahren werden kann. Bei Erreichen der gewünschten Position in der Längsausdehnung des Turms 7 kann mittels einer Halterungsvorrichtung 19 der Turbinenträger 3 mit der Turbine T verankert werden. Die Halterungsvorrichtung 19 kann dabei Teil des Turbinenträgers 3 oder auch getrennt davon ausgeführt sein. Bei Drehung des Windes (sich ändernde Windrichtung) kann der Turbinenträger 3 die Turbine T der Windenergieanlage durch die vorstehend angegebene Verfahreinrichtung 18 oder durch eine weitere Einrichtung um die Vertikalachse gedreht werden.

Die Verfahreinrichtung 18 zum Heben und Senken der Turbine T der Windenergieanlage 1 kann aus einem Seilsystem bestehen oder durch Schienensysteme etc. gebildet werden. Auch ist es möglich, dass die Verfahreinrichtung einen oder mehrere Antriebsmotoren aufweist, die mit einem Ritzel versehen sind, welches seine Kraft an einen gegenüberliegenden Zahnkranz, welcher am Turm der Windenergieanlage angeordnet ist, einleitet.

Die Halterungsvorrichtung 19 kann durch Bolzen, durch Klemmen oder dergleichen gebildet werden, damit der Turbinenträger 3 in verschiedenen vorbestimmten Höhen am Turm 7 arretiert werden kann. Grundsätzlich kann die Halterungsvorrichtung 19 den Turbinenträger 3 an jeder beliebigen Stelle oder Position entlang des Turms 7 arretieren.

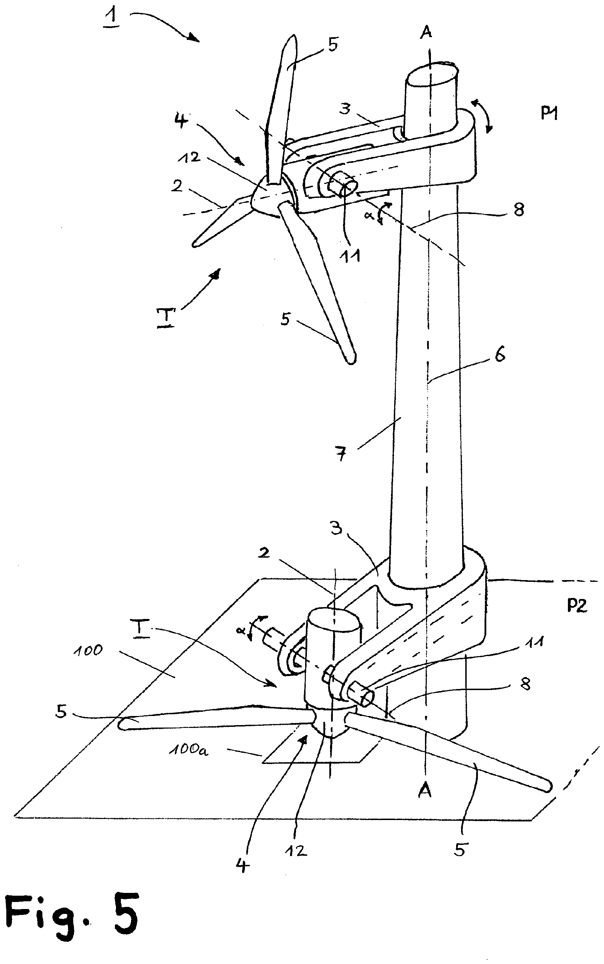

Figur 5 veranschaulicht mittels einer vereinfachten und schematischen Darstellung die Möglichkeit, die Turbine T sowie den Turbinenträger 3 am Turm 7 der Windenergieanlage 1 entlang nach unten, wahlweise bis zum Erdboden nahe der Verankerung des Turms 7 abzusenken. Hierbei zeigt Figur 5 die nachstehend beschriebenen Elemente der Windenergieanlage 1 in der Betriebsposition im oberen Teil des Turms 7 sowie in der abgesenkten Position. Die Betriebsposition am obersten Ende des Turms 7 wird auch als eine erste Position P1 und die abgesenkte Position am Fuß des Turms 7 als zweite Position P2 bezeichnet. Mögliche Zwischenpositionen zwischen diesen maximalen und minimalen Höhen werden als dritte Position P3 bezeichnet. Die Anordnung beispielsweise im oberen Teil von Figur 1 befindet sich somit in der ersten Position P1.

In Figur 5 ist schematisch gezeigt, auf welche Weise sowohl ein Absenken als auch ein Verschwenken der Turbine T einer Windenergieanlage 1 durchgeführt werden kann, wobei auch bei einem Verschwenken (Drehen) der Turbine T die Rotorblätter 5 des Rotors 4 der Windenergieanlage 1 an der Rotornabe 35 des Rotors 4 montiert bleiben können. Bei einem technischen Wartungsbedarf beispielsweise des Generators 14 (Figur 3) der Windenergieanlage 1, welcher in dem Turbinenträger 3 als Teil der Turbine T angeordnet sein kann, kann die Turbine T ohne großen Zeitaufwand verschwenkt und abgesenkt werden und es kann dann eine Wartung des Generators in vereinfachter Weise am Erdboden vorgenommen werden, ohne andere Komponenten demontieren zu müssen. Dabei kann ein erst ein Absenken und dann ein Verschwenken des Rotors 4 der Turbine T aus einer im Wesentlichen vertikalen Ebene in eine im Wesentlichen horizontale Ebene erfolgen, oder aber erst ein Verschwenken und dann ein Absenken, je nachdem, welches Verfahren angemessen ist, z.B. in Abhängigkeit von der Geometrie der Rotorblätter, dem Gesamtgewicht, den Umwelteinflüssen wie z.B. der Windstärke oder weiteren Einflüssen. Grundsätzlich kann es vorteilhaft sein, ein Verschwenken erst in niedrigeren Höhen bei geringeren Windgeschwindigkeiten durchzuführen, da dann mit hoher Wahrscheinlichkeit weniger unerwartete Kräfte (z.B. aufgrund sich verlagernder aerodynamischer Kräfte an den Rotorblättern beim Verschwenken) auf die gesamte Vorrichtung wirken als in großen Höhen im Bereich der Turmspitze. Auch können dabei die seitlich wirkenden Kräfte auf den Turm 7 vermindert werden.

Neben den möglichen Verschwenken der Turbine T gemäß der Darstellung in Figur 1 um wenige Winkelgrade (erster Winkelbereich) zur Neigung der Drehachse 2 des Rotors entsprechend den Windverhältnissen besteht nun die Möglichkeit eines Verschwenkens der Turbine T der Windenergieanlage 1 um große Winkel (zweiter Winkelbereich, etwa 0° bis 10°) in die entgegengesetzte Richtung im Bereich von 0° bis über 90° oder 110°. Hierzu ist die in Figur 5 gezeigte Lagerstruktur vorgesehen, die den Turbinenträger 3 umfasst, der mit dem Turm 7 in Verbindung (Formschluss) steht. Das Drehlager 11 ermöglicht ein Verschwenken der drehbar gelagerten Turbine T nicht nur gemäß Figur 1 (erster Winkelbereich) sondern ebenfalls gemäß Figur 5 (zweiter Winkelbereich), so dass nach dem Schwenkvorgang die Rotordrehachse 2 annähernd parallel zur Turmachse A-A 6 steht und eine Rotationsebene der Rotorblätter 5 annähernd parallel zum Erdboden (der gedachten Horizontalen als Bezugsebene H) angeordnet ist. Die vereinfachte Darstellung in Figur 5 zeigt lediglich das Grundprinzip des Verschwenkens der Turbine T und des Absenkens der gesamten Einheit beispielsweise bestehend aus der Turbine T und dem Turbinenträger 3. Figur 5 zeigt somit den Turbinenträger 3 jeweils in der ersten und der zweiten Position P1 und P2.

Figur 5 zeigt im Einzelnen die Tragstruktur der Windenergieanlage 1 beispielsweise in Form des Turms 7, der auf einem Boden 100, z.B. dem Erdboden, aufgestellt und dort verankert ist. An dem Turm 7 ist eine Windenergieanlage 1 vorgesehen, die hier sowohl in einer oberen (Betriebs-)Position P1 als auch in einer unteren Position P2 am Erdboden 100 dargestellt ist. Dabei ist der Rotor 4 der Turbine T mit beispielsweise drei Rotorblättern 5 in der unteren Position in eine im Wesentlichen horizontale Ebene geschwenkt und insbesondere an einem Montageplatz 100a in unmittelbarer Nähe des Turms 7 ohne großen Platzbedarf positionierbar. In der oberen (Betriebs-)Position ist der Rotor 4 in einer zumindest annähernd vertikalen Ebene angeordnet bei zumindest annähernd horizontaler Rotorachse 2. An dem Montageplatz 100a kann der Rotor 4 derart angeordnet sein, dass sich der Turm 7 in einem Winkelsegment zwischen zwei (von drei oder mehr) Rotorblättern 5 befindet. Ein Verfahren entlang des Turms 7 kann beispielsweise auch bei dieser Ausrichtung der Rotorblätter 5 erfolgen. Für den Fall, dass der Turm 7 nicht exakt orthogonal zu dem Boden 100 ausgerichtet ist und somit kein annähernd rechter Winkel zwischen Turmhochachse A-A 6 und Erdboden 100 gebildet wird, z.B. aufgrund von Bodenunebenheiten oder dergleichen, kann ein jeweiliges Rotorblatt 5 auch in der Nähe des vollständigen Absenken vor dem Erreichen der in Figur 5 gezeigten Endposition demontiert werden, um den Rotor 4 ablegen zu können, z.B. mit nur zwei von drei Rotorblättern, wobei über den Kippwinkel α kurz vor Erreichen der Endposition die Lage des betreffenden Rotorblatts hierfür gegenüber dem Boden 100 ausgerichtet werden kann.

Es kann somit die Rotorachse 2 im Betrieb um einige Grad (z.B. 3 bis 10 Grad) gegenüber der Horizontalen geschwenkt werden kann (positiver Drehwinkel α), um ein optimales Betriebsverhalten und eine gute Energieausbeute der Windenergieanlage 1 in Abhängigkeit externer Einflüsse wie z.B. der Windstärke einzustellen. Es können diese kleine Drehwinkel α des ersten Winkelbereichs als positive Drehwinkel bezeichnet werden. Wird die Turbine T um die Drehachse 8 nach unten (in Figur 5) gedreht bzw. geschwenkt, dann liegen größere Winkel α des zweiten Winkelbereichs vor, die relativ zur Horizontalen (Bezugsebene) H auch als negative Winkel α bezeichnet werden können. Es kann hierdurch die Schwenk- bzw. Drehrichtung um die Drehachse 8 über oder unter die Horizontale beschrieben werden. Das Drehlager (Lagereinrichtung) 11 kann dabei an dem Turbinenträger 3 angeordnet sein und auch mit diesem drehfest verbunden sein und den Turbinenträger 3 um eine Kipp- bzw. Drehachse lagern, welche der Drehachse 8 entspricht. Das Drehlager 11 stellt eine koaxial zu der Drehachse 8 angeordnete Lagereinrichtung dar.

Eine Schwenkbewegung der Turbine T an den Drehlager 11 zur Montage oder Demontage bzw. Wartung kann dabei z.B. dadurch erreicht werden, dass ein Aktuator (nicht dargestellt) vorgesehen ist, welcher z.B. zwischen der im Betrieb zum Turm 7 gewandten Rückseite des Turbinenträgers 3 angeordnet ist und welcher auf den Turbinenträger 3 einwirken kann. Der Aktuator kann z.B. als Hydraulikzylinder ausgeführt sein, und er kann die Turbine T aktiv und gesteuert drehen (schwenken), sei es um kleine positive Drehwinkel α oder um große negative Drehwinkel α zur Demontage oder Montage.

Der Aktuator kann wahlweise auch zwischen dem einen Arm (oder beiden Armen) des Turbinenträgers 3 in der beispielhaften Darstellung gemäß Figur 5 in unmittelbarer Nähe zu dem Drehlager 11 angeordnet sein und sich im Wesentlichen allein an dem Arm des Turbinenträgers 3 abstützen und ein Drehmoment in den Turbinenträger 3 oder das Drehlager 11 einbringen. Diese Anordnung kann ferner einen sehr kompakten Aktuator ermöglichen, da unabhängig von der Größe des Kipp-Winkels, d.h. dem Ausmaß der Auslenkung oder Drehung, der Aktuator sein Lage bzw. seinen Kraftangriffspunkt nicht wesentlich verändern muss. Der Aktuator kann z.B. an einem auf dem Turbinenträger 3 angeordneten Zahnkranz (nicht dargestellt) angreifen, wobei der Zahnkranz z.B. teilkreisförmig ausgebildet ist.

Ferner ist in Figur 5 erkennbar, dass eine Lagerung der Turbine T der Windenergieanlage 1 derart möglich ist, dass das Drehlager 11 bzw. die Drehachse 8 zumindest annähernd in dem Schwerpunkt der Turbine T angeordnet ist oder entsprechend der Ausgestaltung die Drehachse 8 geringfügig über dem Schwerpunkt liegt. Es könne hierbei die erforderlichen Kräfte zur Drehung der Turbine T relativ zu dem Turbinenträger 3 vermindert werden. Im Ergebnis zeigt die Darstellung in Figur 5 die Möglichkeiten der Drehung (Kippen) der Turbine T relativ zu dem Turbinenträger 3 sowie das Verfahren des Turbinenträgers 3 entlang des Verlaufs des Turms 7 der Windenergieanlage 1, so dass einerseits eine Betriebsposition (dritte Position P3) auf einer Zwischenhöhe eingestellt werden kann, die geringer ist als die Höhe der Betriebsposition am oberen Ende des Turms 7 (erste Position P1) und dass andererseits die Turbine T und der Turbinenträger 3 vollständig nach unten in die Nähe des Erdbodens 100 gebracht werden kann zur Montage, Demontage oder zur Wartung und Reparatur (zweite Position P2). Es kann dabei die Rotornabe 12 auf dem Erdboden 100 oder in einer entsprechenden Vorrichtung zur Vermeidung von Beschädigungen liegen.

Zum Drehen oder Schwenken der Turbine T relativ zum Turbinenträger 3 wird der Rotor 4 in eine Position gebracht, so dass der Turm 7 in einer Lücke zwischen zwei der Mehrzahl der Rotorblätter 5 liegt und es wird der Rotor 4 in dieser Position festgehalten.

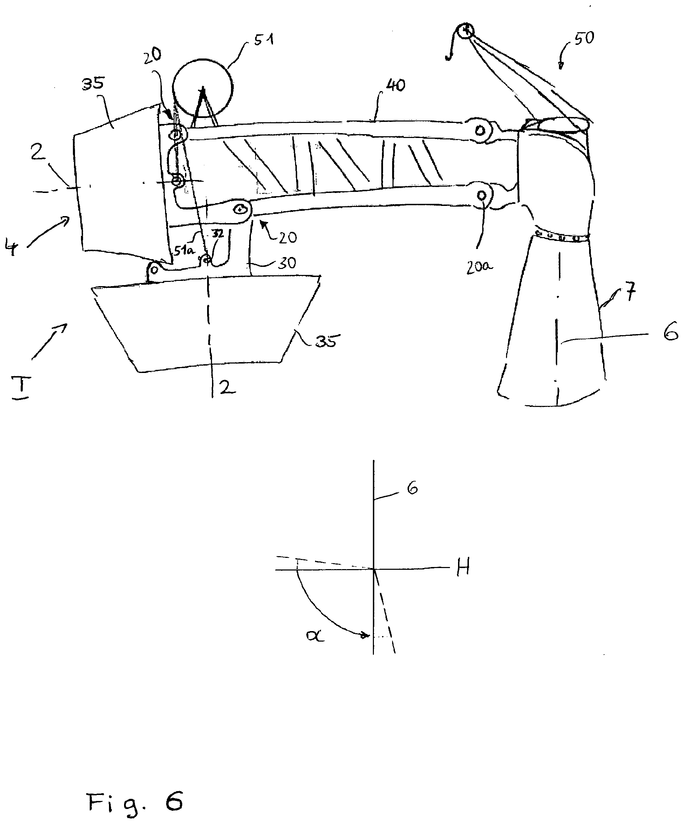

Figur 6 zeigt ein weiteres Ausführungsbeispiel der Anordnung der Windenergieanlage 1 mit einer Turbine T und einem Turbinenträger.

In Figur 6 ist die Anordnung der Windenergieanlage 1 vereinfacht und schematisch dargestellt, wobei Größenverhältnisse und Proportionen nicht relevant sind. Die Windenergieanlage 1 gemäß Figur 6 umfasst einen Kran 50 oder eine gleichartige Einrichtung auf einem Turm 7 und/oder eine Seilwinde 51, die auf einer Trägereinrichtung in Form des Turbinenträgers 40 (entspricht dem Turbinenträger 3) vorgesehen ist, um eine Turbine T der Windenergieanlage 1 von einer oberen Position (in der Nähe des oberen Mastendes, Standard-Betriebsposition) zu einer zumindest bodennahen Position für spezielle Zwecke abzusenken. Bei dem dargestellten Ausführungsbeispiel kann eine Rotornabe 35 (entspricht der Rotornabe 12) über zwei Bauteile 30, 40 an einer Abstützvorrichtung in Form des Turm 7 abgestützt (befestigt) werden, wobei zwei optionale Schnittstellen 20, 20a zur Verbindung oder Kopplung der Rotornabe 35 und deren Aufnahmeeinrichtung 30 zu dem Turm 7 gezeigt sind, d. h. zwischen einer Aufnahmeeinrichtung 30 (einem ersten Bauteil) für die Rotornabe 35 und einer Trägereinrichtung 40 (einem zweiten Bauteil) sowie zwischen dem zweiten Bauteil und dem Kopf des Turms 7, und wobei das erste Bauteil gegenüber dem zweiten Bauteil um eine Achse schwenkbar ist, welche in einer etwa horizontal verlaufenden Ebene angeordnet ist, so dass der Rotor 4 mit Rotorblättern aus einer im Wesentlichen vertikal angeordneten Ebene in eine im Wesentlichen horizontal angeordnete Ebene gedreht bzw. gekippt werden kann. Figur 6 zeigt die Turbine, hierbei angedeutet durch die Rotornabe 35, in zwei unterschiedlichen Positionen, d. h. zum einen in der Betriebsposition und zum anderen in der gedrehten Position (schwenken gemäß dem zweiten Winkelbereich).

Hinsichtlich des Begriffs "Boden" für eine zumindest bodennahe Lagerung kann dabei Bezug genommen sein auf eine Bezugsfläche, die z.B. der Erdoberfläche bzw. Erdboden 100 entspricht (siehe Figur 5), sei es das Festland oder die See. Der Kran 50 oder die Seilwinde 51 kann dazu mit der Rotornabe 35 und deren Aufnahmeeinrichtung 30 gekoppelt werden, wobei die Rotornabe 35 dann von einer Aufnahmeeinrichtung 30 und/oder der Trägereinrichtung 40 entkoppelbar ist. Somit schließt eine elastische Schnittstelle 20 mit Federung- und Dämpfungselementen nicht aus, dass mindestens ein Gelenk vorgesehen werden kann, welches ein Verschwenken der Rotornabe 35 (Turbine) um einen solchen Winkel (zweiter Winkelbereich) ermöglicht, dass die Rotornabe 35 bei einer Demontage ausgehend von dieser verschwenkten Position nur noch in Richtung Boden abgelassen werden muss bzw. zur Montage vom Boden nur angehoben werden muss, um mit einer Trägereinrichtung in Form des Turbinenträgers 40 oder einem gleichartigen Bauteil gekoppelt zu werden und in eine Betriebsposition (z. B. Figur 5 oben) verschwenkt zu werden.

Hierbei zeigt Figur 6 ein und dieselbe Rotornabe 35 (zur Veranschaulichung der Turbine) in verschiedenen Lagen, d. h. in einer Betriebsposition, in welcher auch eine elastische Schnittstelle 20 wirken kann, und in einer Position, aus welcher die Rotornabe 35 mit Aufnahmevorrichtung 30 zur Demontage oder Wartung abgelassen (abgesenkt) werden kann oder zur Montage und Inbetriebnahme zurück in die Betriebsposition geschwenkt werden kann.

Ferner ist in Figur 6 gezeigt, dass ein Seil oder gleichartigen Verbindungsmittel 51a der Seilwinde 51 an einer im Wesentlichen mittig angeordneten Kupplungsstelle 32 mit der Aufnahmeeinrichtung 30 verbindbar ist, und dass der Bereich bzw. die Bereiche, in welchen eine elastische Schnittstelle 20 (elastische Elemente sind nicht explizit bzw. vollständig dargestellt) vorgesehen sein kann, nicht notwendigerweise in einer Ebene liegen müssen. Ebenfalls nicht explizit dargestellt, jedoch durch das Bezugszeichen 20a angedeutet, ist eine zweite Schnittstelle bzw. eine weitere Kupplungseinheit zwischen dem zweiten Bauteil, d.h. dem Turbinenträger 40 und dem Kopf des Turms 7, und diese Schnittstelle 20a kann analog zu der Schnittstelle 20 ausgeführt sein oder aber auch andersartige elastische Elemente aufweisen, z.B. Elemente, die vorrangig eine Dämpfung bewirken. Die elastische Schnittstelle 20 kann steuerbare oder nicht steuerbare Elemente aufweisen.

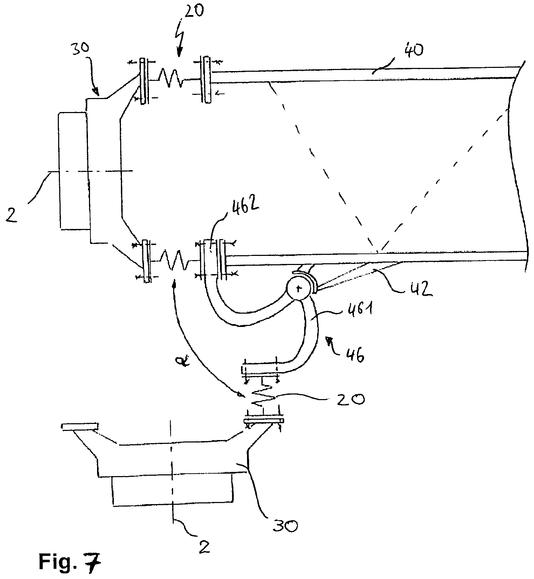

Figur 7 zeigt eine weitere Möglichkeit des Drehens der durch die Aufnahmeeinrichtung 30 veranschaulichten Turbine T der Windenergieanlage 1, wobei eine Gelenkvorrichtung 46 vorgesehen ist und die Gelenkvorrichtung 46 zwischen einem Teil einer elastischen Schnittstelle 20 und dem zweiten Bauteil 40 angeordnet ist und sich an dem zweiten Bauteil 40 abstützt. Insbesondere kann eine Gelenkvorrichtung 46 vorgesehen sein, welche sich an der Turbinenträger 40 abstützt, insbesondere über eine oder mehrere Stützen 42. Die Gelenkvorrichtung 46 weist einen Gelenkarm 461 auf, der mit einem Flansch 462 gekoppelt ist oder zusammen mit diesem Flansch 462 eine einstückige Stütze bildet. Der Gelenkarm 461 ist zumindest teilweise gebogen ausgeführt, so dass er an dem Turbinenträger 40 abgestützt werden kann und dennoch auf einfache Weise zwischen einen Flansch 41 der Turbinenträger 40 und die elastische Schnittstelle 20, insbesondere ein elastisches Element 21, geschwenkt werden kann. Dazu kann der Flansch 462 so ausgeführt sein, dass er auf einfache Weise an den Turbinenträger 40 und eine Aufnahmeeinrichtung 30 oder eine Rotorlagerung (nicht dargestellt) gekuppelt werden kann, also dass er z.B. bei Schraubenverbindungen Durchgangsbohrungen aufweist, welche in der gleichen Lage angeordnet sind wie Durchgangsbohrungen an dem Flansch 41 dem Turbinenträger 40 und/oder an einem Flansch eines elastischen Elements 21.

Wird die Aufnahmeeinrichtung 30 nun an allen Schnittstellen, an welchen nicht die Gelenkvorrichtung 46 vorgesehen ist, von dem Turbinenträger 40 entkoppelt, und wird zudem der Flansch 462 der Gelenkvorrichtung 46 von dem Turbinenträger 40 entkoppelt, so ist die Aufnahmeeinrichtung 30 so gegenüber dem Turbinenträger 40 schwenkbar, dass ein Rotor oder die gesamte Turbine T (nicht dargestellt) aus einer zumindest annähernd vertikalen Ebene (Drehebene des Rotors) in eine zumindest annähernd horizontale Ebene (Rotordrehachse steht etwa senkrecht) geschwenkt werden kann. Dies kann z.B. dadurch erfolgen, dass bei einem Schwenken der Abstand zwischen der Aufnahmeeinrichtung 30 und Flanschen 41 des Turbinenträgers 40, in welchen die Gelenkvorrichtung 46 nicht vorgesehen ist, langsam vergrößert wird, sei es über eine Art Seilzug zwischen der Aufnahmeeinrichtung 30 und diesen Flanschen 41 oder, wahlweise zusätzlich, über ein Bremsmoment, welches einer Drehung der Gelenkvorrichtung 46 gegenüber der Trägereinrichtung 40 entgegenwirkt. Die in Figur 7 gezeigte Gelenkvorrichtung 46 stellt eine Variante dar, welche sich durch eine leichte Integrationsmöglichkeit in eine vorhandene Trägerstruktur auszeichnet, denn eine derartige Gelenkvorrichtung kann z.B. auch nachgerüstet werden, indem an dem Turbinenträger 40 eine Abstützvorrichtung 42 vorgesehen wird und der Flansch oder die Flansche 41 um einen solchen Betrag versetzt werden (z.B. durch Kürzen des Turbinenträgers 40), dass zusätzlich ein Flansch 461 der Gelenkvorrichtung 46 zwischen dem Turbinenträger 40 und der elastischen Schnittstelle 20 angeordnet werden kann, ohne die elastische Schnittstelle 20 verlagern oder einzelne elastische Elemente 21 verändern zu müssen.

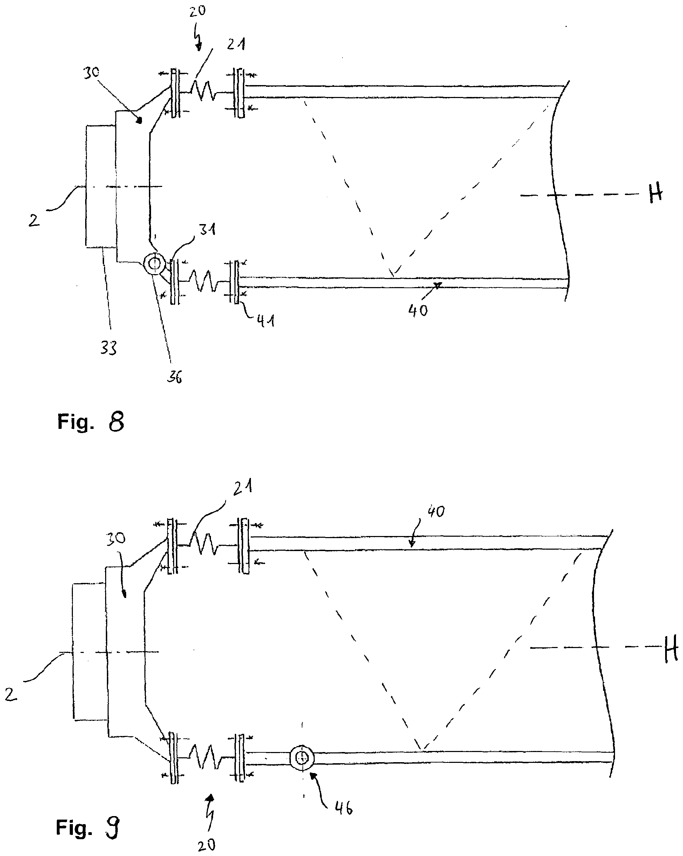

Die Gelenkvorrichtung 46 kann auch zwischen einer elastischen Schnittstelle 20 und dem ersten Bauteil 30, welches z.B. einer Rotoraufnahme entspricht, vorgesehen sein, so dass ein Entkoppeln des Rotors von der elastischen Kupplungseinrichtung bzw. Schnittstelle und diese bildenden elastischen Elemente 21 möglich ist. Dies kann von Vorteil sein, wenn ein besonders schweres Bauteil bzw. ein besonders großer Rotor und damit eine schwere Turbine T der Windenergieanlage 1 zu demontieren ist, denn dann kann die Gewichtskraft des Rotors direkt in der Turbinenträger 40 geleitet werden, ohne über elastischen Elemente 21 zu verlaufen. Je nach Ausgestaltung der elastischen Elemente 21 ist dies auch im Hinblick auf eine unnötige Beanspruchung und damit eine möglicherweise einhergehende Veränderung der Federeigenschaften oder Dämpfungseigenschaften der elastischen Elemente bzw. eines Teils der elastischen Elemente 21 (elastische Schnittstelle) von Nutzen. Dabei ist es grundsätzlich so, dass eine Gelenkvorrichtung direkt in den Kraftfluß eingebunden sein kann, wie in den weiteren Figur 8 und 9 gezeigt, oder wie in Figur 7 gezeigt, außerhalb des Kraftflusses und unabhängig bzw. als Zusatzbestandteil des Turbinenträgers 40. Bei der in Figur 7 gezeigten Gelenkvorrichtung 46 kann insofern von einem externen Gelenk außerhalb des Kraftflusses bzw. neben den Hauptkraftflusslinien gesprochen werden.

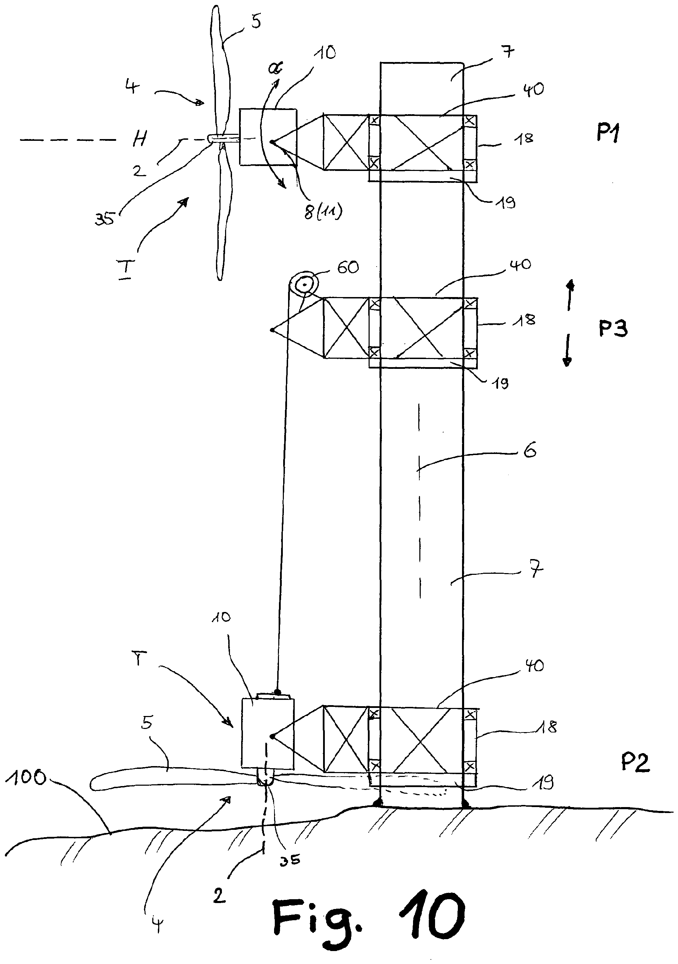

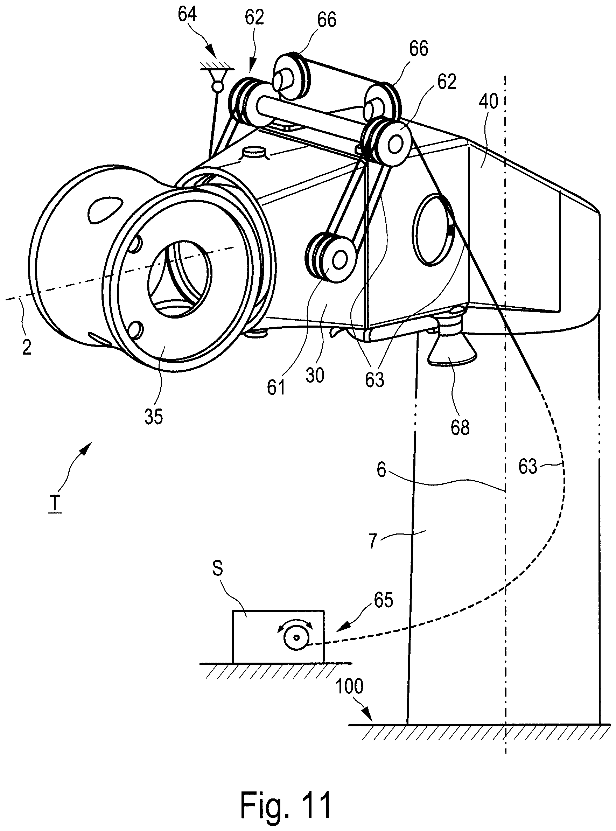

Ob nun ein gesamter Rotor zusammen mit Rotorblättern oder nur eine Rotorlagerung und gegebenenfalls weiteren Komponenten eines Triebstrangs über diesen Kippmechanismus montier- bzw. demontierbar sind, wird immer davon abhängen, wie massiv oder tragfähig die Gelenkvorrichtung 46 bzw. die elastischen Elemente 21 ausgeführt sind. Jedenfalls kann durch eine Gelenkvorrichtung gemäß Figur 9, oder auch gemäß einer der beiden folgenden Figuren 10 und 11, zumindest eine gleichzeitige Montage bzw. Demontage von Rotor, ohne Rotorblättern, aber mit einigen weiteren oder allen üblicherweise zu einem Triebstrang zuzuordnenden Komponenten sichergestellt werden.

In Figur 8 ist eine Gelenkvorrichtung 36 dargestellt, welche ein Drehen (Abkippen) einer Rotorlagerung bzw. eines ersten Bauteils gegenüber einem zweiten Bauteil ermöglicht, wobei die Gelenkvorrichtung 36 z.B. bei einer Windenergieanlage gemäß Figur 7 zum Einsatz kommen kann, und wobei die Gelenkvorrichtung 36 gemäß Figur 8 direkt in dem Kraftfluß zwischen der Rotorlagerung bzw. einer Aufnahmeeinrichtung für eine Rotorlagerung entsprechend einem ersten Bauteil und einem zweiten Bauteil angeordnet sein kann und einen Teil der Aufnahmeeinrichtung bilden kann. Die Gelenkvorrichtung 36 kann grundsätzlich dieselbe Funktion übernehmen wie eine in Figur 7 gezeigte Gelenkvorrichtung 46, jedoch ist die Gelenkvorrichtung 36 nicht zwischen einer elastischen Schnittstelle 20 und einer feststehenden Tragstruktur angeordnet, sondern zwischen einer ein erstes Strukturbauteil bildenden Aufnahmeeinrichtung 30 und der elastischen Schnittstelle 20, insbesondere als Teil der Aufnahmeeinrichtung 30 direkt in dem Kraftfluß zwischen einer Rotorlagerung (nicht dargestellt) bzw. der Aufnahmeeinrichtung 30 für eine Rotorlagerung und einem zweiten Bauteil, d.h. einem Turbinenträger 40. Die Gelenkvorrichtung 36 bildet somit eine Aufnahmeeinrichtung 30, welche zumindest aus zwei gegeneinander beweglichen Bestandteilen besteht, wobei je nach Anzahl an Kopplungsstellen bzw. Flanschen 31 die Gelenkvorrichtung 36 eine Relativbewegung eines Rotors (nicht dargestellt) gegenüber mindestens zwei Flanschen 31 sicherstellt, und eine feste Verbindung kann in montiertem Zustand über mindestens einen Flansch 31 sichergestellt werden.

Es ist zu erwähnen, dass es bei dieser Variante einer Gelenkvorrichtung 36 nicht ausgeschlossen ist, dass die Gelenkvorrichtung 36 z.B. auch starr geschaltet werden kann, also blockiert werden kann, so dass auch die Möglichkeit besteht, ein weiteres Gelenk (nicht dargestellt), z.B. eine Gelenkvorrichtung gemäß den Figuren 7 und 9 vorzusehen, welches ebenfalls blockiert werden kann. Dadurch kann für jeden Anwendungsfall und je nach externen nicht beeinflussbaren Faktoren, z.B. Umwelt- oder Witterungseinflüssen, entschieden werden, ob ein Schwenken auf der gefederten Seite um die Gelenkvorrichtung 36 oder auf der ungefederten Seite um eine Gelenkvorrichtung an dem Turbinenträger 40 erfolgen soll. Bei der in Figur 8 gezeigten Gelenkvorrichtung 36 kann also von einem Gelenk gesprochen werden, welches auf der gefederten Seite im Kraftfluß angeordnet ist. Im Betrieb übernimmt die Gelenkvorrichtung 36 jedoch keine vorrangige Funktion. Vielmehr kann es so ausgeführt sein, dass es schwingungstechnisch bzw. in Bezug auf den Kraftfluß irrelevant ist, ob eine Gelenkvorrichtung vorgesehen ist oder nicht.

In Figur 9 ist eine Variante des Gelenks 46 dargestellt, welche sich durch eine in Bezug auf den Gesamtaufbau übersichtliche und auch kostengünstig realisierbare Ausführungsform auszeichnet. Das Gelenk 46 kann z.B. bei einer Windenergieanlage gemäß Figur 7 zum Einsatz kommen, wobei das Gelenk 46 direkt in dem Kraftfluß zwischen der Rotorlagerung bzw. einer Aufnahmeeinrichtung für eine Rotorlagerung (entsprechend einem ersten Bauteil) und einem zweiten Bauteil bzw. einem Turbinenträger 40 angeordnet sein kann und einen Teil des zweiten Bauteils bilden kann. Das Gelenk 46 kann direkt in der Struktur des Turbinenträgers 40 vorgesehen sein, somit in den Turbinenträger 40 selbst integriert sein, so dass keine zusätzliche Flanschverbindung erforderlich ist und der Montage- oder Demontageaufwand nicht erhöht wird und auch keine zusätzlichen Fehlerquellen oder Unsicherheitsfaktoren vorliegen. Bei dem in Figur 9 gezeigten Gelenk 46 kann also von einem Gelenk gesprochen werden, welches auf der ungefederten Seite im Kraftfluß angeordnet ist. Dieses Gelenk wirkt sich weder auf eine Gleichverteilung der Massen einer Aufnahmeeinrichtung 30 bzw. einer Rotorlagerung noch auf Feder- oder Dämpfungseigenschaften aus, denn es ist Teil des im Wesentlichen starr gelagerten Turbinenträger 40.

Figur 10 zeigt eine vereinfachte schematische Darstellung der Turbine T und des an dem Turm 7 der Windenergieanlage 1 angeordneten Turbinenträgers 40 mit der Möglichkeit des Verfahrens des Turbinenträgers 40 sowie der Möglichkeit des Schwenkens und des Absenkens der Turbine T für den Fall, dass sich die Windenergieanlage 1 nicht in Betrieb befindet. Gemäß der Darstellung in Figur 10 ist derselbe Turbinenträger 40 in verschiedenen Positionen an dem Turm 7 der Windenergieanlage 1 gezeigt.

In der oberen Position an Turm 7 befindet sich der Turbinenträger 40 in einer Betriebsposition in der Nähe des oberen Ende des Turms 7 oder befindet sich in einer geringfügig abgesenkten Position gemäß Figur 10, so dass die Turbine T einschließlich des Rotors 4 mit Rotorblättern 5 sowie dem Triebstrang 10 (im Allgemeinen bestehend aus einem Getriebe, falls dies erforderlich ist, und einem Generator (beide nicht gezeigt)) in einer Betriebsstellung oder auch einer Ruhestellung angeordnet ist. Die oberste Position stellt die erste Position P1 dar. Die gesamte Baueinheit der Turbine T kann in Abhängigkeit von vorherrschenden Windbedingungen, wie einer Windgeschwindigkeit derart angeordnet sein, dass die Drehachse 2 des Rotors 4 im Wesentlichen horizontal verläuft und die Drehebene der Rotorblätter 5 im Wesentlichen senkrecht zur Längsausdehnung des Turms 7 oder der in Figur 1 gezeigten im Wesentlichen horizontalen Bezugsebene H liegt. Sollten die Windverhältnisse es erfordern, dass die Drehachse 2 des Rotors 5 geneigt werden soll, dann besteht die Möglichkeit, wie es vorstehend in Verbindung mit den vorherigen Ausführungsbeispielen beschrieben wurde und beispielsweise in Figur 1 gezeigt ist, die Drehachse 2 in dem ersten Winkelbereich relativ zur Bezugsebene H zu neigen, indem die gesamte Turbine T mittels des Drehlagers 11 um die Drehachse 8 relativ zu dem Turbinenträger 40 gedreht wird. Hierbei können die vorstehend angegebenen kleinen positiven Winkel α des ersten Winkelbereichs von etwa 0° bis 10° relativ zur Bezugsebene H (Figur 1) eingestellt werden. Bei mäßigen Windverhältnissen kann die Drehachse 2 auch in der in Figur 10 gezeigten Position verbleiben.

Der obere Teil von Figur 10 veranschaulicht somit die Möglichkeit, die Turbine T der Windenergieanlage 1 bei Bedarf um kleine Winkel α (erster Winkelbereich) zu neigen, wie es in Figur 1 gezeigt ist. Dies ist in Figur 10 mittels eines gekrümmten Pfeils und der Bezeichnung α angedeutet. Die Möglichkeit der Einstellung einer vorbestimmten Neigung der Drehachse 2 der Turbine T ist unabhängig davon, dass der Turbinenträger 40 entlang der Ausdehnung des Turms 7 zumindest innerhalb eines vorbestimmten Bereichs beliebig bewegt und somit auch abgesenkt werden kann. Der Aufbau entspricht im Wesentlichen dem in Figur 4 gezeigten Aufbau, dessen grundsätzliche Eigenschaften in Bezug auf ein Anheben oder Absenken des Turbinenträgers 40 und ein Neigen der Turbine T ebenfalls in Verbindung mit Figur 5 beschrieben sind.

Figur 10 zeigt ebenfalls die in Figur 4 genannte Verfahreinrichtung 18, die in Verbindung steht mit dem Turbinenträger 40, und es ist die Halterungsvorrichtung 19 vorgesehen, um nach dem Verfahren des Turbinenträgers 40 entlang des Turms 7 den Turbinenträger 40 in einer bestimmten Position (beispielsweise der zweiten oder dritten Position P2 oder P3) festzuhalten und zu verankern.

Die in den Figuren 4 und 10 gezeigte Anordnung ist mit den vorstehend beschriebenen Funktionen des Weiteren unabhängig davon, dass der Turbinenträger 40 um die Längsachse 6 des Turms 7 gedreht werden kann zur Nachführung an sich ändernde Windrichtungen (Azimut-Verstellung).

In Figur 10 ist ferner die Möglichkeit veranschaulicht, die Turbine T vollständig abzusenken (bis auf die Ebene des Erdbodens am Fuß des Turmes 7, zweite Position P2), während der Turbinenträger 40 auf einer vorbestimmten Höhe am Turm 7 verbleibt (Zwischenposition oder dritte Position P3), oder ein Absenken vorzunehmen, indem sowohl der Turbinenträger 40 als auch die Turbine T abgesenkt werden. Die Anordnung des Turbinenträgers 40 auf einer Zwischenhöhe des Turms 7 gemäß Figur 10 veranschaulicht, dass die Turbine T mittels einer entsprechenden Anordnung von Seilen in Verbindung mit einer Seilwinde 60 (Hubeinrichtung) nach einem Lösen von dem Turbinenträger 40 abgesenkt werden kann. Die Windenergieanlage 1 ist dabei nicht in Betrieb. Hierzu erfolgt eine Drehung der Turbine T um die Drehachse 8 entsprechend dem zweiten Winkelbereich, ein Lösen der Turbine T und ein Absenken der Turbine T entlang des Turms 7 bis zum Erdboden 100, so dass die Turbine, und insbesondere die Rotornabe 35 und die zugehörigen Rotorblätter 5 in vorbestimmter Weise auf der Erdoberfläche liegen können. Bei einer relativ zu dem Turm 7 schrägen Anordnung des Erdbodens 100 ist die Turbine T entsprechend zu schwenken.
Die untere Darstellung in Figur 10 veranschaulicht ebenfalls die Möglichkeit, dass die Verfahreinrichtung 18, die in Verbindung mit dem Turbinenträger 40 steht, in der Lage ist, den Turbinenträger 40 vollständig bis zum Fuß des Turms 7 (zweite Position P2) abzusenken, so dass bei dieser gezeigten Situation sowohl der Turbinenträger 40 als auch die Turbine T beide gemeinsam abgesenkt werden und ab einer vorbestimmten Höhe die Turbine T um die großen Winkel α (zweiter Winkelbereich, relativ zur Bezugsebene H, die innerhalb des gesamten Winkelbereichs liegt) geneigt wird, so dass die gedachte Rotationsebene der Rotorblätter 5 im Wesentlichen parallel zu dem Erdboden oder bei Bedarf auch leicht schräg angeordnet ist. Hierbei wird die räumliche Lage der Rotordrehachse 2 verändert und es können ebenfalls die Turbine T und insbesondere die Rotorblätter 5 und die Rotornabe 35 auf dem Erdboden 100 oder einer entsprechenden vorbereiteten Fläche aufliegen.
Es können somit die Azimutdrehung um die Längsachse 6 des Turms 7, die Drehung der Turbine T um die Drehachse 8, und das Anheben oder Absenken des Turbinenträgers 40 entlang des Verlaufs des Turms 7 unabhängig voneinander erfolgen. Es ist jedoch vor Erreichen einer minimalen Höhe der Drehachse 2 des Rotors 4 über dem Erdboden (in Abhängigkeit von der Länge der Rotorblätter 5) die Turbine T zu drehen (kippen), so dass eine Beschädigung der Rotorblätter 5 vermieden wird.
Während in den vorherigen Figuren vereinfachte und schematische Darstellungen zur Veranschaulichung der beteiligten Komponenten und ihrer Funktionen verwendet wurden, zeigt die weitere Figur 11 die erfindungsgemäßen Ausführungsform der Anordnung der Turbine T und des Turbinenträgers 40 zum drehbaren Lagern der Turbine. Figur 11 zeigt die Turbine T in dem eingesetzten Zustand, wie sie vom Turbinenträger 40 aufgenommen und gehalten wird. Dies kann ein Ruhezustand oder ein Betriebszustand sein. Die in Figur 11 gezeigte Anordnung veranschaulicht nicht die Möglichkeiten des leichten Neigens der Turbine T um kleine Winkel α (erster Winkelbereich), wie es beispielsweise in Figur 1 dargestellt ist. Diese Möglichkeit der leichten Drehung oder Neigung der Turbine T ist gemäß Figur 11 ebenfalls vorgesehen, jedoch nicht im Einzelnen gezeigt. Die Darstellung von Figur 11 betrifft im Einzelnen die Anordnung eines Mechanismus zum Drehen der Turbine T nach unten und nachfolgendem Absenken der Turbine T auf eine beliebige Höhe, und vorzugsweise bis zum Fuß des Turms 7 zur Auflage auf der Erdoberfläche (beispielsweise 100 gemäß Figur 5).

In der Ruheposition oder Betriebsposition gemäß Figur 11 sind erste Umlenkrollen 61 an der Turbine T befestigt. Der Turbinenträger 40 umfasst zweite Umlenkrollen 62, die mechanisch an dem Turbinenträger 40 befestigt sind. In Verbindung mit den ersten und zweiten Umlenkrollen 61 und 62 ist ein Seil 63 vorgesehen, mittels dessen die ersten und zweiten Umlenkrollen 61 und 62 im Sinne eines Flaschenzugs verbunden sind. Ein Endpunkt des Seils 63 ist mit einem Fixpunkt 64 verbunden, der beispielsweise am Turbinenträger 40 angeordnet sein kann, und das andere Seilende 65 wird zu einer Seilwinde S geführt, um die Seillänge und damit die Relativbewegung zwischen der Turbine T und dem Turbinenträger 40 zu beeinflussen. Die Seilwinde S kann dabei ein Teil der Windenergieanlage 1 oder eine extern angeordnete Einheit sein. Bei einer entsprechenden durch die Seilwinde S ausgeübten Kraft auf das Seil 63 kann die Turbine T in ihre Betriebs- oder Ruheposition gemäß Figur 11 gebracht werden, und es besteht die Möglichkeit, die Turbine T in dieser Position mechanisch mit dem Turbinenträger 40 zu verbinden. Danach kann das Seil 63 entfernt werden, oder es kann die vom Seil 63 ausgeübte Kraft gelöst werden, so dass das Seil 63 entspannt wird und verbleiben kann. Mittels an dem Turbinenträger 40 angeordneten dritten Umlenkrollen 66 wird ein Seilkraftausgleich zwischen den jeweils links und rechts angeordneten ersten und zweiten Umlenkrollen 61 und 62 gewährleistet. Die vorstehend angegebenen Komponenten 61 bis 66 bilden einen Seilzug.

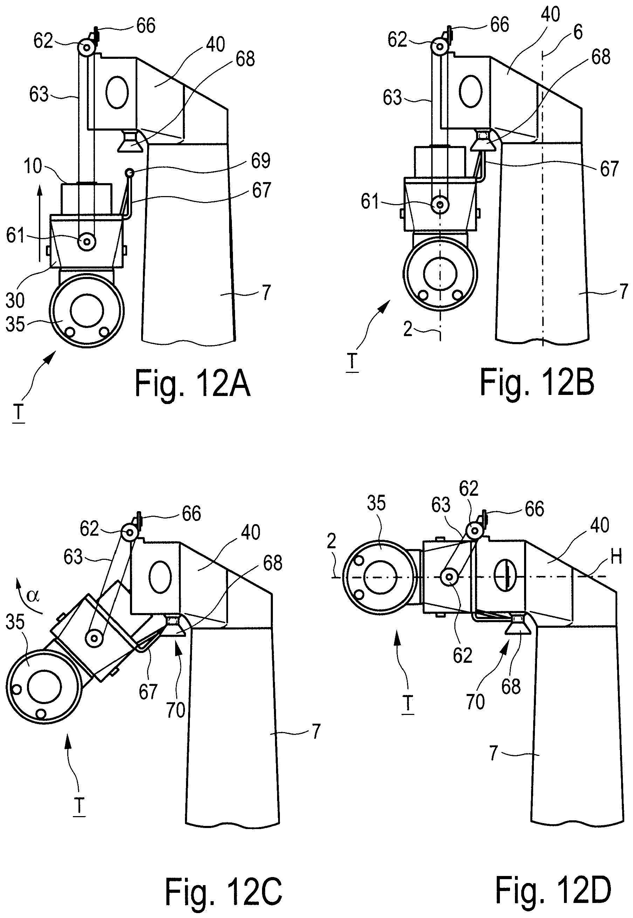

Mittels der dritten Umlenkrollen 66 wird erreicht, dass bei lediglich einem Seil 63 zwischen den Umlenkrollen 61, 62 und 66 ein Kräfte- und Belastungsausgleich zwischen beiden Seiten der in Figur 11 gezeigten Anordnung bewirkt wird. Ohne einen entsprechenden Seilkraftausgleich zwischen beiden Seiten (d. h. zwischen links und rechts in der Darstellung gemäß Figur 11) würden in besonderen Betriebsfällen erheblich unterschiedliche Kräfte in dem Seil 63 entstehen, so dass eine einseitige Belastung bis zu dem Doppelten der üblichen Belastung (Standardbelastung bei völliger Gleichverteilung der auftretenden Kräfte) auftreten würde. Es wäre dann ebenfalls unter erheblicher Steigerung der Kosten erforderlich, die beteiligten Elemente, wie das Seil 63, die Umlenkrollen 61, 62 und 66 sowie deren Befestigung auf zumindest die doppelte Belastung zu dimensionieren. Eine ungleiche Belastung, d. h. eine wesentlich stärkere Belastung auf einer Seite der Seil- und Umlenkrollenanordnung gemäß Figur 11 könnte auch bei Fehlen eines Seilkraftausgleichs auftreten bei dem Ablassen oder Anheben der Turbine T (Figur 12) unter Wind, wenn die Turbine T einer Schwingbewegung infolge der Windlast unterliegt.

Die in Figur 10 gezeigte und am Turbinenträger 40 angeordnete Seilwinde 60 sowie die Komponenten (erste und zweite Umlenkrollen 61 und 62, das Seil 63 mit dem Fixpunkt 64 und dem weiteren Seilende 65 sowie die dritten Umlenkrollen 66) bilden eine Schwenkeinrichtung.

Figur 12 mit den Einzelfiguren 12A bis 12D veranschaulicht die Möglichkeit, mit der in Figur 11 gezeigten Anordnung eine beispielsweise am Erdboden 100 montierte, gewartete oder reparierte Turbine T mittels des Seilzugs (60 bis 66) wieder nach oben zur Betriebsposition anzuheben und im Turbinenträger 40 anzuordnen und zu befestigen.

Ausgangspunkt der nachfolgenden Darstellung ist die Situation, bei der die Turbine T vollständig auf den Erdboden 100 abgesenkt wurde und nun erneut angehoben und zur Betriebsposition gebracht werden soll. Die Darstellung in den Figuren 11 und 12 zeigt lediglich die Rotornabe 35 ohne Rotorblätter 5 zur Vereinfachung der Darstellung, wobei die Rotorblätter 5 vor dem Anheben der Turbine T montiert werden. Die Turbine T kann in vorteilhafter und einfacher Weise vollständig in der zweiten Position P2 (am Erdboden 100) vor dem Anheben montiert werden.

Gemäß Figur 12A steht die Turbine T über das Seil 63 und die ersten Umlenkrollen 61 (an der Turbine) mit den zweiten Umlenkrollen 62 des Turbinenträgers 40 in Verbindung. Wird mittels der (in Figur 12 nicht gezeigten) Seilwinde S am freien Seilende 65 eine entsprechende Kraft ausgeübt und das Seil 63 angezogen, dann wird die Turbine T angehoben und gelangt auf ihrem Weg entlang des Turms 7 in die Nähe des Turbinenträgers 40 gemäß Figur 12A. Wird gemäß Figur 12B die Turbine T weiter angehoben und in Richtung des Turbinenträgers 40 entlang des Verlaufs des Turms 7 bewegt, dann gelangt die Turbine T in Eingriff mit dem Turbinenträger 40. Hierzu weist die Turbine T einen Verbindungsarm 67 auf, der an der Seite der Turbine T angeordnet ist, die nach dem vollständigen Einbringen der Turbine T in den Turbinenträger 40 an der unteren Seite der Turbine T angeordnet ist. Des Weiteren umfasst der Turbinenträger 40 eine Fangvorrichtung 68, die gemäß den Figuren 12A bis 12D und Figur 11 im unteren Bereich des Turbinenträgers 40 angeordnet ist. Die an dem Seil 63 hängende Turbine T wird im Wesentlichen senkrecht nach oben geführt, und es gelangt der Verbindungsarm 67 in Eingriff mit der Fangvorrichtung 68, wobei ein am Verbindungsarm 67 angeordnetes abgerundetes Ende 69 in eine entsprechende Vertiefung der Fangvorrichtung 68 gelangen kann, so dass die Turbine T und der Turbinenträger 40 über die genannten Elemente miteinander in Verbindung stehen. Die Turbine T kann dabei zumindest einen Verbindungsarm 67 oder auch eine Mehrzahl davon aufweisen.

Liegt das abgerundete Ende des Verbindungsarms 67 der Turbine T in der Fangvorrichtung 68, dann kann dadurch ein Drehpunkt 70 gebildet werden, um den sich die Turbine T drehen kann, wenn diese gemäß Figur 12C weiter in Richtung des Turbinenträger 40 bewegt wird. Mit dem weiteren Anziehen des Seils 63 bewegt sich gemäß Figur 12C die Turbine T um den Drehpunkt 70 nach oben, so dass mit der Darstellung in Figur 12D eine Endlage dieser Bewegung erreicht ist und die Position der Turbine T und des Turbinenträgers 40 relativ zueinander eine Normalposition oder Standardposition ist, wie sie auch in Figur 11 gezeigt ist. Es kann sich hierbei in Abhängigkeit von der betrieblichen Situation der Turbinenträger in der ersten oder der dritten Position (Zwischenposition) P1 oder P3 befinden.

In dieser Situation steht der Verbindungsarm 67 mit seinem abgerundeten Ende 69 in Eingriff mit der Fangvorrichtung 68, und es kann die Turbine T mit weiteren technischen Mitteln, wie beispielsweise einer Verschraubung, fest mit dem Turbinenträger 40 verbunden werden. In diesem Zusammenhang besteht auch die Möglichkeit, dass beispielsweise gemäß der Darstellung in den Figuren 7 bis 9 elastische Elemente zwischen dem Turbinenträger 40 und der Turbine T angeordnet werden können.

Gemäß den Figuren 11 und 12 übernimmt somit die beim Annähern der Turbine T an den Turbinenträger 40 geschaffene Drehverbindung 70 die Aufgabe der festen Drehverbindung, wie sie beispielsweise in den früheren Figuren angegeben ist. Es werden beispielsweise die Funktionen der jeweiligen Drehgelenke 36 und 46 in den Figuren 8 und 9 sowie des allgemeinen Drehgelenks um die Drehachse 8 in Verbindung mit dem Drehlager 11 (beispielsweise Figuren 5 und 10) übernommen.

Figur 12 mit den Teilfiguren 12A bis 12D zeigt das Zurückführen der Turbine T aus einer Position nahe dem Erdboden 100 und dem Einsetzen der Turbine T in den Turbinenträger 40. Sollte hingegen ausgehend von der in Figur 12D gezeigten Situation die Turbine T abgesenkt werden, dann ist es erforderlich, die Maßnahmen in umgekehrter Reihenfolge vorzunehmen, indem die Turbine T im Innern des Turbinenträgers 40 gelöst, leicht abgesenkt wird und dabei die Drehbewegung um die zeitweilige Drehverbindung 70 durchführt (zweiter Winkelbereich), und schließlich ganz mittels des Seils 63 abgesenkt wird auf die gewünschte Höhe und insbesondere auf den Erdboden 100 dass die Rotorblätter 5 auf einer entsprechend vorbereiteten Fläche ohne Schaden aufliegen können.

Gemäß der Anordnung in Figuren 11 und 12 umfasst die Windenergieanlage und insbesondere die Kombination aus Turbine T und Turbinenträger 40 des Weiteren ein in diesen Figuren nicht gezeigtes Drehgelenk, um die beispielsweise in Figur 1 gezeigte leichte Neigung in Abhängigkeit von den Windverhältnissen (erster Winkelbereich), und auch eine geregelte Einstellung der Neigung in Abhängigkeit von gemessenen Windstärken (Figur 2) zu erreichen. In diesem Fall kann die Turbine T aus der in den Figuren 11 und 12D gezeigten Standardposition leicht geneigt werden, insbesondere um kleine positive Winkel α gemäß Figur 1. In diesem Fall kann in Abhängigkeit von der gewählten Anordnung das abgerundete Ende 69 des Verbindungsarms 67 nicht mehr in der Fangvorrichtung 68 in Anlage stehen und somit keine Drehverbindung 70 dieser Art bilden. In diesem Fall sind die Drehachse zur Bereitstellung der geringfügigen Neigung gemäß Figur 1 und die Drehachse zum Drehen der Turbine T zum Lösen derselben von dem Turbinenträger und Absenken der Turbine T auf beispielsweise den Erdboden nicht identisch. Die Möglichkeit identischer Drehpunkte ist beispielsweise in den Figuren 4 und 5 angegeben.

Es ist ferner zu beachten, dass eine Neigung oder ein Verdrehen der Turbine T der Windenergieanlage 1 nicht zwangsläufig um einen konkreten Drehpunkt bzw. um eine Drehachse (z. B. Drehachse 8 gemäß den Figuren 1, 4 und 5) erfolgen muss, sondern dass auch die Drehung durch eine mechanische Einrichtung oder einen Mechanismus, wie beispielsweise eine Viergelenkanordnung, erfolgen kann. Die Schwenkeinrichtung kann somit als die Lagereinrichtung die mechanische Einrichtung wie beispielsweise die Viergelenkanordnung aufweisen. Hierbei kann die die Turbine T der Windenergieanlage 1 relativ zum Turbinenträger 3 oder 40 sowohl translatorisch als auch rotatorisch bewegt und nach der Bewegung gegenüber ihrer ursprünglichen Lage gedreht und bedarfsweise verschoben werden, so dass danach ein vollständiges Absenken möglich ist. Es erfolgt hierbei eine Kombination von translatorischen und rotatorischen Bewegungen, die im Ergebnis zu dem gewünschten Schwenken (d. h. zu dem gewünschten Schwenkwinkel) der Turbine T führen. Es kann dabei eine vorbestimmte Schwenklinie (Kurve) erreicht werden. Hierbei ist mittels der mechanischen Einrichtungen sowohl das Schwenken im ersten Winkelbereich (im Betrieb der Windenergieanlage 1) als auch in Verbindung mit größeren Schwenkwinkeln im zweiten Winkelbereich (Maßnahmen zur Montage/Demontage oder Wartung, vor dem Absenken) möglich.

Entsprechend der Erfindung umfasst somit die Anordnung einer Windenergieanlage 1 in Verbindung mit der Turbine T und dem Turbinenträger 40 ein System aus Hebeln und Drehpunkten für die Kinematik der Bewegung insbesondere der Turbine T in dem Turbinenträger 40 oder in der Nähe des Turbinenträgers, so dass eine bessere Positionierung und gleichzeitig bei der Bewegung eine sichere Führung gewährleistet ist. Insbesondere ermöglicht der Eingriff des abgerundeten Endes 69 des Verbindungsarms 67 in die Fangvorrichtung 68 die Bildung der (zumindest zeitweiligen) Drehverbindung 70, so dass eine sichere Führung der insbesondere eine Drehbewegung durchführenden Turbine T gewährleistet ist und somit auch bei einer vorbestimmten Windbelastung während der Montage die Arbeiten fortgesetzt werden können. Auf diese Weise werden auch Betriebssituationen für eine Montage zugänglich, die mit einem anderen bekannten Aufbau der Windenergieanlage nicht möglich wäre, so dass weiter Standzeiten und Ausfallzeiten der Windenergieanlage 1 gemäß der vorliegenden Erfindung vermieden werden können.
Ferner besteht die Möglichkeit, gemäß beispielsweise Figur 12A, die an dem Seil 63 frei hängende Turbine T nochmals um ein vorbestimmtes Maß zu drehen, beispielsweise um eine durch die ersten Umlenkrollen 61 gebildete Drehachse, so dass hinsichtlich der Position der Turbine T beim Absenken in Richtung des Erdbodens eine Anpassung an eine geneigte Bodenoberfläche vorgenommen werden kann, so dass ohne eine Beschädigung beispielsweise ein Dreiblattrotor abgelegt werden kann.
Ungeachtet dessen, dass gemäß den Figuren 11 und 12 die Turbine T von dem Turbinenträger 40 getrennt und danach abgesenkt wird, und in gleicher Weise auch aus der abgesenkten Position wieder mit dem Turbinenträger 40 verbunden werden kann, ist der Turbinenträger selbst in der Lage, eine Drehung um die vertikale Achse, d.h. die Achse 6 des Turms 7, durchzuführen, so dass eine Azimut-Verstellung vorgenommen werden kann.
Des Weiteren besteht unabhängig von der Möglichkeit des Absenkens der Turbine T mittels des Seils 63 ebenfalls die Möglichkeit, den Turbinenträger gemäß der Darstellung in den Figuren 4, 5 und 10 entsprechend einem weiteren Bedarf und insbesondere den Windverhältnissen eine Absenkung des Turbinenträgers 40 zusammen mit der Turbine T auf eine Zwischenhöhe (z.B. die dritte Position P3) vorzunehmen, wenn beispielsweise ein zu starker Wind die Windenergieanlage 1 mechanisch und elektrisch überlasten würde. Die Höhe der Turbine T über dem Erdboden 100 (dritte Position P3) wird dabei durch die Windgeschwindigkeit selbst bestimmt, die durch einen Anemometer oder dergl. gemessen werden kann. Da bei einer gemessenen Windgeschwindigkeit auch relativ einfach die Windgeschwindigkeit in einer Höhe unterhalb der Turmspitze vorbestimmt werden kann oder auch mit einem zweiten Anemometer gemessen werden kann, kann dann sehr sicher vorhergesagt und die Turbine T auf ein Höhe der dritten Position P3 eingestellt werden, wo noch immer ein sehr guter Ertrag möglich ist, z. B. wo die Windenergieanlage 1 weiterhin im Nennbetrieb betrieben werden kann, gleichwohl aber die Lasten auf die Windenergieanlage 1 in mechanischer und elektrischer Hinsicht deutlich verringert werden können. Ein Abschalten der Windenergieanlage, wie es bei bekannten Lösungen notwendig ist, ist gemäß der vorliegenden Erfindung nicht erforderlich. Diese Maßnahme kann kombiniert werden mit einer Pitch-Verstellung der Rotorblätter 5 sowie einem leichten neigen der Rotordrehachse 2 gemäß dem ersten Winkelbereich.

In Verbindung mit dem Montagevorgang gemäß Figur 12 und auch einer gleichartigen und in umgekehrter Reihenfolge vorzunehmenden Demontage besteht die Möglichkeit, die an der Rotornabe 35 angeordneten Rotorblätter 5 während der Bewegung der Turbine T (Figuren 12A bis 12D) um ihre eigene Längsachse zu drehen (Pitch-Verstellung), so dass in diesem Fall der Einfluss einer Windlast vermindert werden kann. Die Pitch-Verstellung ist unabhängig von der Bewegung der Turbine T relativ zum Turbinenträger 40 und stellt somit eine weitere unabhängige Anpassungsmöglichkeit dar.

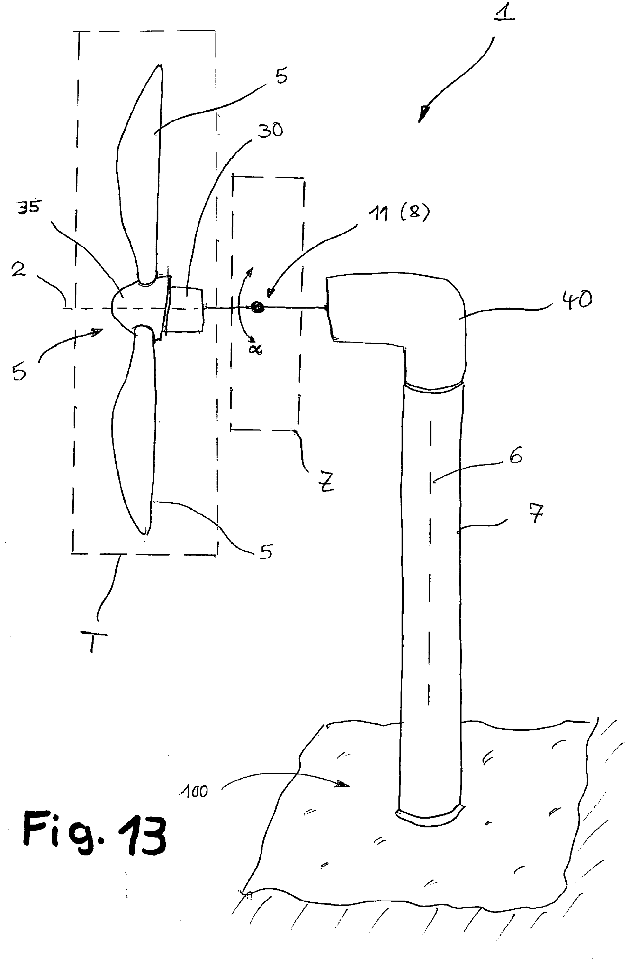

Figur 13 zeigt in vereinfachter und schematischer Weise die Windenergieanlage 1, wobei hinsichtlich der Komponenten der Windenergieanlage eine Anordnung in Form verschiedener Module im Vordergrund steht.

In gleicher Weise wie in den Figuren 4, 5 und 10 umfasst die Windenergieanlage den auf dem Turm 7 (Tragstruktur) angeordneten Turbinenträger 40. Des Weiteren zeigt Figur 13 die Turbine T der Windenergieanlage 1, wobei diese vereinfacht aus dem Rotor 4 mit Rotorblättern 5 sowie beispielsweise der Rotornabe 35 und der Aufnahmeeinrichtung 30 bestehen kann. Zwischen der Turbine T und dem Turbinenträger 40 ist ein Zwischenelement Z angeordnet, das im Wesentlichen aus dem Drehlager 11 besteht, mittels dessen eine Drehung um die Drehachse 8 möglich ist. Das Zwischenelement (Zwischenmodul) Z stellt somit eine Verbindung oder Schnittstelle zwischen der Turbine T und dem Turbinenträger 40 dar.

Somit kann die Gesamtheit der Windenergieanlage 1 gemäß Figur 13 aus einem ersten Modul bestehen, das beispielsweise eine allgemeine Trägereinrichtung, beispielsweise den Turm 7 umfasst. Des Weiteren kann ein zweites Modul vorgesehen sein, das den Turbinenträger 40 umfasst. Ein drittes Modul kann beispielsweise in Form der Turbine T gebildet werden, wobei das Zwischenelement Z (und somit das 4. Modul) die Schnittstelle zwischen dem zweiten und dem dritten Modul bildet.

Es kann somit das erste Modul in Form des Turms 7 als eine universelle Trägereinrichtung gebildet werden, wobei auch ein erstes Modul aus dem Turm 7 und dem Turbinenträger 40 gebildet werden kann. Wird auf der Seite des Turbinenträgers 40 gegenüber dem Zwischenmodul Z eine genormte Schnittstelle gebildet, d.h. werden genormte Anschlusselemente vorgesehen, dann kann eine Mehrzahl von unterschiedlichen Modulen an dem universellen Turbinenträger 40 angeordnet werden, sofern die Schnittstellen und damit die jeweilige mechanische Ausstattung übereinstimmen.

Es besteht seitens der Hersteller von Windenergieanlagen daher die Möglichkeit, die jeweilige Windenergieanlage mit einem vorstehend beschriebenen modularen Aufbau zu planen und herzustellen, so dass in Abhängigkeit von verschiedenen Leistungsklassen oder auch lokalen Bedingungen eines Standorts einer Windenergieanlage die Module unterschiedlich ausgestaltet werden können. Des Weiteren kann sich ein Hersteller auch auf einzelne Module spezialisieren, so dass Module verschiedener Hersteller und unterschiedlicher Art kombiniert werden können, sofern die jeweiligen Anschlusselemente entsprechend definiert und ausgeführt sind, so dass eine freizügige Kombination der verschiedenen Komponenten (Module) möglich ist. Beispielsweise kann der auf die Fertigung des die Turbine T beinhaltenden Moduls spezialisierte Hersteller seine Produkte direkt oder über das Zwischenelement Z mit dem ersten Modul (beispielsweise dem Turbinenträger 40) kombinieren.

Die vorliegende Erfindung ist auf die dargestellte Aufteilung der Module nicht festgelegt. Vielmehr können auch andere Aufteilungen nach Zweckmäßigkeit bestimmt werden.

Im Ergebnis werden mit dem einfachen Verfahren des Turbinenträgers 40 entlang des Turms 7 (Figuren 5 und 10) sowie dem möglichen einfachen Absenken und Anheben der Turbine T gemäß den Figuren 11 und 12 einfache Maßnahmen beschrieben, um auf sehr wirtschaftliche Weise die Windenergieanlage 1 zu montieren oder beispielsweise für eine Wartung oder Reparatur auch zu demontieren. Die Anordnung gemäß den Figuren 11 und 12 und die Vorgehensweise gemäß Figur 12 ermöglicht ein langsames und sanftes Einfädeln der Turbine T in die Standardposition im Turbinenträger 40 (ungeachtet der Position, die der Turbinenträger 40 selbst hat), wobei die Bewegung und insbesondere das Schwenken der Turbine T sicher geführt wird. Auch kann eine gedachte Achse der ersten Umlenkrollen 61 derart angeordnet werden, dass sie über dem Schwerpunkt der Turbine T in frei hängendem Zustand angeordnet ist und somit die Turbine T nach dem Lösen vom Turbinenträger 40 in der anfänglichen Schwenkbewegung durch die Fangvorrichtung und den Verbindungsarm 67 geführt wird, und später eine Führung erreicht wird, indem die Turbine T eine stabile Lage an dem Seil 63 einnehmen kann.

Zur Verbesserung der Führung kann bei dem Absenken der Turbine T und auch bei dem Anheben der Turbine T bei einer Montage eine Führung der Bewegung entlang des Turms 7 erfolgen, indem beispielsweise eine Führung mittels entsprechend gespannter Seile oder auch mittels am Turm angeordneter Schienen folgen kann, indem die Turbine T ihre Bewegung beispielsweise entlang der auf der Außenseite des Turms angeordneten Schienen durchführt. Ebenso besteht die Möglichkeit, dass an der Baueinheit der Turbine T Rollen angeordnet sind oder vor dem Absenken und Anheben der Turbine T angebracht werden, so dass diese auf einer vorbestimmten Fläche der äußeren Oberfläche des Turms 7 in geführter Weise abrollen kann.

Bei dem langsamen und sanften Einsetzen der Turbine T in den Turbinenträger 40 gemäß den Figuren 12A bis 12B werden auch die zur Befestigung der Turbine T im Turbinenträger 40 vorgesehenen Bauelemente, wie Flansche und weitere Befestigungselemente geschont. Es besteht eine nur sehr geringe Gefahr, dass diese Elemente bei dem Montagevorgang oder Demontagevorgang beschädigt werden. Ebenso werden auf den Turm wirkende Stoßkräfte in Verbindung mit dem Anheben und Einsetzen der Turbine T vermindert. Das sanfte Einfädeln der Turbine T beim Einsetzen in den Turbinenträger 40 kann auch mittels entsprechender Dämpfungselemente unterstützt werden. Auf diese Weise werden unerwünschte Schwingungen durch Belastungsstöße vermieden. Eine weitere Unterstützung kann erreicht werden durch eine entsprechende Pitch-Verstellung der Rotorblätter, um im Falle einer Windbelastung eine geringere Angriffsfläche zu bieten. Somit kann auch eine in anderen Fällen unmögliche Montage bei einer vorbestimmten Windbelastung in Verbindung mit der erfindungsgemäßen Anordnung möglich werden.

Das Schwenken der Turbine T der Windenergieanlage 1 ermöglicht es, die Turbine T oder auch die Turbine T zusammen mit dem Turbinenträger 40 bei Mehrblattrotoren eng an dem Turm 7 abzusenken bis auf den Erdboden 100 oder auch anzuheben bis zu einer gewünschten Betriebsposition oder der obersten möglichen Betriebsposition entsprechend der Anordnung des Turms 7 (erste Position P1). Ferner kann auch in Verbindung mit dem Drehen der Turbine, beispielsweise gemäß Figur 12C und in umgekehrter Weise bei einer Demontage und in Verbindung mit dem Absenken ein Mehrblattrotor mit zumindest drei Rotorblättern auf den Erdboden 100 abgelegt werden, ohne dass vorher einzelne Rotorblätter 5 demontiert werden müssen. Der Montageaufwand und die Kosten können erheblich reduziert werden. In Verbindung mit einer entsprechenden Pitch-Verstellung kann auch bei vorbestimmten Windverhältnissen eine Montage oder Demontage durchgeführt werden. Des Weiteren kann bei einer auf die Höhe des Erdbodens 100 abgesenkten Turbine T ein vollständig auf dem Boden montierter Mehrblattrotor auf einfache Weise aufgenommen und vergleichsweise rasch ohne die Beschaffung eines Krans an dem Turm montiert werden. Hierbei wird entweder die Turbine T alleine bewegt, oder es erfolgt eine Bewegung der Turbine T zusammen mit dem Turbinenträger 40 (siehe Figur 10).

Die grundsätzliche Möglichkeit, auch die Turbine T in Verbindung mit dem Turbinenträger 40 abzusenken, ermöglicht es, die Turbine T und den Turbinenträger in einer Zwischenposition am Turm anzuordnen, so dass geänderten Windverhältnissen, und insbesondere einem sehr starken Wind Rechnung getragen werden kann.

Es kann in Verbindung mit der erfindungsgemäßen Anordnung der Rotor der Turbine T am Boden vollständig vormontiert werden, so dass eine einfache Montage ohne wesentliche mechanische Hilfsmittel gewährleistet ist.

Das zum Drehen der Turbine T relativ zu dem Turbinenträger 40 erforderliche Gelenk kann gemäß der Anordnung der Figuren 11 und 12 direkt in dem Kraftfluss zwischen der Turbine T und dem Turbinenträger oder auch außerhalb des Hauptkraftflusses angeordnet sein. Siehe hierzu auch Figuren 9 bis 11. In letzterem Fall muss der Drehpunkt bzw. die Drehachse nicht zwangsläufig im Turbinenträger 40 liegen, sondern die Turbine T kann sich bei dem Kipp- oder Drehvorgang auch an einer anderen Struktur, wie dem Turm 7 als Tragstruktur abstützen. Mit der trichterförmigen Fangvorrichtung 68 ist jedoch am Turbinenträger 40 selbst eine geeignete Vorrichtung angeordnet, um das sanfte Einfädeln der Turbine T bei der Montage oder das sanfte Ausgleiten der Turbine T bei der Demontage nach der Drehung zu gewährleisten.

Mit der erfindungsgemäßen Anordnung der Windenergieanlage 1 können mehrere Maßnahmen zur Anpassung der Leistung der Windenergieanlage 1 in Abhängigkeit von den Windverhältnissen vorgenommen werden. Es besteht die Möglichkeit, mittels der Pitch-Verstellung die wirksame Rotorfläche zu verändern, wobei die Rotorblätter um ihre Längsachse gedreht werden. Die Drehung kann im Sinne einer Steuerung oder einer Regelung beeinflusst werden. Bei einem zu starken Wind, der die Leistungsfähigkeit und die Stabilität der Windenergieanlage 1 beeinflussen kann, besteht die Möglichkeit gemäß der vorstehenden Beschreibung, die Turbine T und den Turbinenträger 40 auf eine geringere Höhe entlang des Turms nach unten zu bewegen, so dass durch die geringere Höhe über dem Erdboden 100 mit einer geringeren Windstärke zu rechnen ist. Des Weiteren kann beispielsweise gemäß der Darstellung in Figur 1 die Turbine T mittels des Drehlagers 11 im Turbinenträger 40 um wenige Winkelgrade, beispielsweise um 4° bis 10° (des ersten Winkelbereichs) schräg gestellt werden, so dass durch diese Neigung ebenfalls ein sicherer Betrieb der Windenergieanlage 1 gewährleistet ist. Im Ergebnis kann die Turbine T im Turbinenträger beispielsweise gemäß den Figuren 4, 5 und 10 um den gesamten Winkelbereich von zumindest 120 ° gedreht werden. Der gesamte Winkelbereich umfasst den ersten Winkelbereich mit kleinen Winkeln in Aufwärtsrichtung (etwa 0° bis zumindest 10°) sowie den zweiten Winkelbereich mit Winkeln in Abwärtsrichtung des zweiten Winkelbereichs von 0° bis zumindest 110°. Der erste und zweite Winkelbereich werden relativ zu der im Wesentlichen horizontalen Bezugsebene H betrachtet (Figuren 1, 4 und 10). Die horizontale Bezugsebene H liegt somit innerhalb des gesamten Winkelbereichs.

Mit den Maßnahmen des Drehens bzw. Schwenkens der Turbine der Windenergieanlage relativ zu der Bezugsebene H, des Absenkens der Turbine T zusammen mit dem Turbinenträger 3 oder 40 (mit bereits geschwenkter Turbine T oder noch in der Betriebsposition) und des davon unabhängigen Verdrehens der Rotorblätter 5 um ihre Längsachse (Pitchen) sind vielfältige Möglichkeiten bereitgestellt, in Abhängigkeit von dem Bedarf, den Windverhältnissen und auch dem Ort der Aufstellung der Windenergieanlage 1 den Betrieb der Windenergieanlage 1 zu beeinflussend oder die Montage oder Demontage wesentlich zu erleichtern.

Da mit den bei der Windenergieanlage 1 eingebauten Einrichtungen zum Anheben und Absenken der Turbine T und des Turbinenträgers 3 und 40 auf einen Kran verzichtet werden kann, der sehr häufig einen Engpass bei der Beschaffung sowie hinsichtlich der Kosten darstellt, werden der Aufwand für Montage und Demontage erheblich vermindert. Werden die Türme von Windenergieanlagen höher ausgebildet, beispielsweise auf mehr als 150 m, dann ist die Beschaffung eines Kran zum Anheben der entsprechenden Massen der Turbine T und des Turbinenträgers 3 oder 40 nahezu unmöglich. Die erfindungsgemäße Anordnung unter Verzicht auf einen Kran ermöglicht die Vergrößerung der Höhe der Türme von Windenergieanlagen im Bereiche, bei denen eine größere Windgeschwindigkeit vorherrscht und somit die Leistungsausbeute der Windenergieanlage gesteigert werden kann, wobei diese Steigerung größer ist als bei einer Vergrößerung der Rotorblattfläche (größere Rotorblattlänge). Mit der erfindungsgemäßen Windenergieanlage 1 besteht die Möglichkeit, in Windgeschwindigkeitsregionen vorzugdringen, die ertragreicher sind, ohne dass die Kosten entsprechend stark steigen. Eine größere Turmhöhe ist hinsichtlich eines Ertrags besser als eine größere Rotorblattlänge. Mit der komfortablen Möglichkeit der Montage/Demontage der Windenergieanlage 1 gemäß der Erfindung (eingebaute Kranfunktion) ohne Verwendung eines Krans kann die Turmhöhe weiter gesteigert werden. Dies gilt insbesondere auch für den Offshore-Bereich, bei dem die Beschaffung eines Krans für die entsprechenden Massen und Höhen kaum möglich ist.

Die vorstehenden Maßnahmen können auch unabhängig voneinander eingeleitet werden, wobei lediglich bei der Absenkung des Turbinenträgers 40 auf eine geringere Höhe (z. B. Position P3 in Figur 10) die Neigung der Turbine T ein bestimmtes Maß nicht überschreiten darf, um eine Kollision der Rotorblätter 5 mit dem oberen Ende des Turms 7 zu vermeiden.

Die vorliegende Erfindung umfasst ebenfalls die weiteren nachstehenden Aspekte. Es kann die Windenergieanlage mit einem Rotor bereitgestellt werden, welcher zwei oder gegebenenfalls mehr Rotorblätter aufweist, wobei der Rotor mit einem Generator zur Erzeugung elektrischer Energie verbunden ist und Rotor und Generator von einem Maschinenträger aufgenommen werden, und wobei der Maschinenträger eine Lagerungsstruktur aufweist, welche ein Verfahren des Maschinenträgers während des Betriebs der Windenergieanlage an einem Turm, zu dem die Windenergieanlage gekoppelt sein kann, ermöglicht, wobei die Lagerungsstruktur mit dem Turm über wenigstens eine Haltevorrichtung verbunden ist und zum Halten des Maschinenträgers auf einer gewünschten Höhe, die vorzugsweise abhängig ist von der Windgeschwindigkeit in der gewünschten Höhe, ausgestaltet ist. Dabei kann die Lagerungsstruktur eine Drehung des Maschinenträgers um die vertikale Achse des Turms ermöglichen. Ferner kann die Lagerungsstruktur eine Verfahreinheit aufweisen zum Verfahren des Maschinenträgers entlang des Turms, und zwar vom Turmfuß bis zur Turmspitze.

Ein Verfahren zum Betrieb einer Windenergieanlage kann dabei derart ausgeführt werden, dass eine Windenergieanlage mit einem Triebstrang, welcher aus einem Rotor und einem Generator besteht, verfahren wird, indem der Triebstrang entlang der Längsachse des Turms verfahrbar ist, und wobei insbesondere abhängig von der Windgeschwindigkeit die Höhe des Triebstrangs oberhalb des Erdbodens eingestellt werden kann.

Auch kann eine solche Windenergieanlage mit einem Rotor, welcher zwei oder gegebenenfalls mehr Rotorblätter aufweist, wobei der Rotor mit einem Generator zur Erzeugung elektrischer Energie verbunden ist und die Windenergieanlage einen Maschinenträger aufweist, der den Rotor und Generator, die einen Triebstrang bilden, trägt, derart aufgebaut sein, dass der Rotor eine vorbestimmte Rotorachsneigung mit einem Winkel *α* aufweist und der Rotor um einen Drehpunkt zur Veränderung der Rotorachsneigung schwenkbar ist, und dass für die Schwenkbewegung des Rotors bzw. des Triebstrangs wenigstens ein Antrieb vorgesehen ist, und dass der Antrieb sich am Maschinenträger abstützt und mit einer einstellbaren Kraft auf den Triebstrang einwirkt. Der Antrieb kann z.B. durch einen Hydraulikzylinder gebildet werden, aber auch durch einen elektrischen Motor oder einen alternativen, rotativen oder linearen Aktuator. Dabei kann die Rotorachsneigung abhängig von der Windgeschwindigkeit und/oder Belastung auf die Rotorblätter der Windenergieanlage auf einen vorbestimmten Wert eingestellt (verändert) werden. Ferner können zur Ermittlung des vorbestimmten Werts der Rotorachsneigung Kräfte auf die Rotorblätter gemessen werden, die gemessenen Werte in einem Rechner verarbeitet werden gemäß einer vorbestimmten mathematischen Funktion, und der berechnete Wert kann für die Rotorachsneigung durch Einstellung des Antriebs für die Schwenkbewegung des Triebstrangs eingestellt werden. Der Rotor der Windenergieanlage kann ferner eine Nabe aufweisen, innerhalb dessen ein Getriebe untergebracht ist, welches auf der Eingangsseite das Drehmoment des Rotors aufnimmt und welches auf der Ausgangsseite mit dem rotierenden Teile des Generators verbunden ist. Zur Übertragung des Momentes des Rotors auf das Getriebe kann eine Kupplung vorgesehen sein, welche bevorzugt als Elastomer-Kupplung ausgelegt ist, so dass die Einleitung von Axialkräften auf den Rotor und damit auf Nabe und Getriebe minimiert werden kann. Die Windenergieanlage kann zu einem Turm gekoppelt sein, auf dem der Maschinenträger gelagert ist, wobei der Triebstrang seitlich vom Turm beabstandet angeordnet sein kann und der Drehpunkt bzw. die Drehachse zum Verschwenken und Einstellen der Rotorachsenneigung seitlich vom Turm versetzt sein kann.

Die vorliegende Erfindung wurde anhand von Ausführungsbeispielen in Verbindung mit den zugehörigen Figuren beschrieben.

Es ist jedoch für den auf diesem Gebiet tätigen Fachmann selbstverständlich, dass die Ausgestaltung der vorliegenden Erfindung gemäß den vorstehend beschriebenen Figuren und die für die jeweiligen Bauteile und Komponenten verwendeten Bezugszeichen der Figuren und der Beschreibung sowie die beispielhaften Angaben nicht einschränkend auszulegen sind. Somit ist die Erfindung auf die angegebene Darstellung in den Figuren und insbesondere auf Dimensionen und Anordnungen nicht beschränkt. Als zur Erfindung gehörig werden sämtliche Ausführungsformen und Varianten gesehen, die unter die beigefügten Patentansprüche fallen.

## Patentansprüche

1. Windenergieanlage (1) mit einem Rotor (4), der zwei oder gegebenenfalls mehr Rotorblätter (5) aufweist und der zur Drehung um eine Rotordrehachse (2) drehbar gelagert ist, wobei der Rotor (4) mit einem Generator (10) zur Erzeugung elektrischer Energie verbunden ist und der Rotor (4) und der Generator (10) einen Teil einer Turbine (T) bilden, die von einem Turbinenträger (40) aufgenommen wird, und der Turbinenträger an einer Tragstruktur (7) drehbar angeordnet ist, **dadurch gekennzeichnet, dass** die Turbine zum Turbinenträger (40) angehoben und zur Befestigung in den Turbinenträger (40) geschwenkt wird, mit
- einem Seilzug (61 bis 66) zum Anheben der Turbine (T) zum Turbinenträger, zum Schwenken der Turbine (T) in den Turbinenträger (40) und zum beweglichen Halten der Turbine (T) während des Schwenkvorgangs, und
- einer Lagereinrichtung (67 bis 70) zum zumindest zeitweiligen drehbaren Lagern der Turbine (T) während des Schwenkvorgangs, wobei die Lagereinrichtung (67 bis 70) umfasst:
- eine an dem Turbinenträger (40) angeordnete Fangeinrichtung (68), und
- einen an der Turbine (T) angeordneten Verbindungsarm (67) mit einem abgerundeten Ende (69), wobei
- zumindest während des Schwenkvorgangs und zur Führung der Turbine (T) das abgerundete Ende (69) des Verbindungsarms (67) in Eingriff mit der Fangeinrichtung (68) steht.

2. Windenergieanlage nach Anspruch 1, wobei die Lagereinrichtung (67 bis 70) ausgebildet ist für den zeitweiligen Eingriff mit zumindest dem an der Turbine (T) angeordneten Verbindungsarm (67) während des Schwenkens, wobei mittels des Seilzugs (61 bis 66) nach Abschluss des Schwenkvorgangs der Eingriff des Verbindungsarms (67) mit der Fangeinrichtung (68) lösbar ist.

3. Windenergieanlage nach Anspruch 1, wobei der Seilzug (61 bis 66) ausgebildet ist, die Turbine (T) aus dem Turbinenträger (40) herauszuschwenken und die Turbine (T) während des Schwenkvorgangs beweglich zu halten, und die Turbine (T) in der geschwenkten Position abzusenken.

## Claims

1. Wind power installation (1) with a rotor (4) which has two or possibly more rotor blades (5) and which is rotatably mounted for rotation around a rotor rotation axis (2), wherein the rotor (4) is connected to a generator (10) for generating electrical power, and the rotor (4) and the generator (10) form a part of a turbine (T) which is received by a turbine carrier (40), and the turbine carrier is rotatably arranged at a supporting structure (7), **characterised in that** the turbine is lifted to the turbine carrier (40) and is pivoted into the turbine carrier (40) for fastening, with
- a cable control (61 to 66) for lifting the turbine (T) to the turbine carrier, for pivoting the turbine (T) into the turbine carrier (40) and for movably supporting the turbine (T) during the pivoting process, and
- a bearing device (67 to 70) for at least temporarily rotatably mounting the turbine (T) during the pivoting process, wherein the bearing device (67 to 70) comprises:
- a catching device (68) arranged at the turbine carrier (40), and
- a connection arm (67) having a rounded end (69) arranged at the turbine (T),
wherein
- at least during the pivoting process and for guiding the turbine (T) the rounded end (69) of the connection arm (67) is engaged with the catching device (68).

2. Wind power installation according to claim 1, wherein the bearing device (67 to 70) is configured to temporarily engage with at least the connection arm (67) that is arranged at the turbine (T) during pivoting, wherein the engagement of the connection arm (67) with the catching device (68) can be released by means of the cable control (61 to 66) at the conclusion of the pivoting process.

3. Wind power installation according to claim 1, wherein the cable control (61 to 66) is configured to pivot the turbine (T) out of the turbine carrier (40) und to movably hold the turbine (T) during the pivoting process, and to lower the turbine (T) in the pivoted position.

## Revendications

1. Éolienne (1) avec un rotor (4) qui comporte deux, ou éventuellement plus de deux, pales de rotor (5) et qui est logé de manière à pouvoir tourner autour d'un axe de rotation de rotor (2), lequel rotor (4) est relié à un générateur (10) en vue de la production d'énergie électrique et lequel rotor (4) et lequel générateur (10) forment une partie d'une turbine (T) qui est logée dans un support de turbine (40), lequel support de turbine est agencé de manière à pouvoir tourner au niveau d'une structure porteuse (7), **caractérisée en ce que** la turbine est soulevée jusqu'au support de turbine (40) et est pivotée en vue de sa fixation dans le support de turbine (40), avec
- un tirant à câble (61 à 66) pour soulever la turbine (T) jusqu'au support de turbine, pour faire pivoter la turbine (T) dans le support de turbine (40) et pour maintenir mobile la turbine (T) pendant l'opération de pivotement, et
- un dispositif de palier (67 à 70) pour loger de manière à pouvoir au moins temporairement tourner la turbine (T) pendant l'opération de pivotement,
lequel dispositif de palier (67 à 70) comprend :
- un dispositif de saisie (68) agencé au niveau du support de turbine (40), et
- un bras de liaison (67) agencé au niveau de la turbine (T) et muni d'une extrémité arrondie (69), dans lequel
- au moins pendant l'opération de pivotement et en vue du guidage de la turbine (T), l'extrémité arrondie (69) du bras de liaison (67) est en prise avec le dispositif de saisie (68).

2. Éolienne selon la revendication 1, dans laquelle le dispositif de palier (67 à 70) est conçu pour la mise en prise temporaire au moins avec le bras de liaison (67), agencé au niveau de la turbine (T), pendant le pivotement, laquelle mise en prise du bras de liaison (67) avec le dispositif de saisie (68) peut être défaite au moyen du tirant à câble (61 à 66) après la fin de l'opération de pivotement.

3. Éolienne selon la revendication 1, dans laquelle le tirant à câble (61 à 66) est conçu pour faire pivoter la turbine (T) hors du support de turbine (40) et pour maintenir mobile la turbine (T) pendant l'opération de pivotement, et pour abaisser la turbine (T) dans la position pivotée.
